(19) Europäisches Patentamt
European Patent Office
Office européen des brevets

(11) **EP 2 717 013 A1**

(12) **EUROPEAN PATENT APPLICATION**
published in accordance with Art. 153(4) EPC

(43) Date of publication:
**09.04.2014 Bulletin 2014/15**

(51) Int Cl.:
*G01C 3/06* (2006.01)     *G01B 11/00* (2006.01)
*G06T 1/00* (2006.01)     *H04N 13/02* (2006.01)

(21) Application number: **12794055.9**

(22) Date of filing: **30.05.2012**

(86) International application number:
**PCT/JP2012/063964**

(87) International publication number:
**WO 2012/165491 (06.12.2012 Gazette 2012/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2011   JP 2011120757**

(71) Applicant: **Panasonic Corporation
Kadoma-shi, Osaka 571-8501 (JP)**

(72) Inventors:
• **HARAGUCHI, Kazuma
Osaka 540-6207 (JP)**

• **MIICHI, Nobuhiro
Osaka 540-6207 (JP)**
• **NAKAHARA, Tomoharu
Osaka 540-6207 (JP)**

(74) Representative: **Müller-Boré & Partner
Patentanwälte PartG mbB
Friedenheimer Brücke 21
80639 München (DE)**

(54) **STEREO CAMERA DEVICE AND COMPUTER-READABLE RECORDING MEDIUM**

(57)     The stereo camera device includes: a pair of cameras; a first converter converting images of the cameras into first conversion images; a second converter converting the images into second conversion images; and a disparity estimation unit. The first conversion image is an image in which positions of pixels are represented by two-dimensional orthogonal coordinates defined by a first angle around a first axis defined by a straight line connecting optical centers of the cameras and a second angle around a second axis defined by an optical axis of the camera. The second conversion image is an image in which positions of pixels are represented by two-dimensional orthogonal coordinates defined by the first angle and a third angle around a third axis orthogonal to the first and second axes. The disparity estimation unit calculates a disparity of a desired point in a space based on the first and second conversion images.

FIG. 1

**Description**

**Technical Field**

The present invention relates to stereo camera devices and computer-readable media and more particularly to a stereo camera device for obtaining three-dimensional information of a space with a principle of triangulation using images captured by a plurality of cameras and a computer-readable recording medium storing a program for enabling a computer to operate as the stereo camera device.

**Background Art**

In the past, the stereo vision has been known as a technique for obtaining three-dimensional information of a space. The stereo vision is a technique of calculating a distance to a desired part in the three-dimensional real space by applying a principle of triangulation on images of a real space taken by a plurality of cameras. Specifically, in the stereo vision, images of the three-dimensional real space are taken by a plurality of cameras that are arranged such that fields of view thereof are partly overlapped with each other. When an image of the desired part in the real space is produced on an imaging device of each camera, the distance to the desired part in the real space is measured with the principle of triangulation using directions from an optical center in the real space to the desired part, a relative position between cameras, and postures,

The following explanation relates to images (hereinafter referred to as "captured images") taken by two cameras. To measure the distance to the desired part from the two captured images requires information about: a length (hereinafter referred to as "base line length") of a segment connecting optical centers of the two cameras; and a distance corresponding to a difference between positions of images in the two captured images corresponding to the desired part in the real. The distance corresponding to the difference between the positions of the images is equal to a disparity between images taken by the two cameras that view the desired part in the real space. As the distance corresponding to the difference between the positions of the images, a difference between distances from reference positions respectively set on the two captured images to the desired part is used.

To calculate the disparity from the captured images, it is necessary to search the captured images for positions of images corresponding to the desired part in the real space. In other words, it is necessary to determine corresponding points relating to the same part with regard to the two captured images taken by the two cameras. The process of searching the two captured images for the corresponding points is so-called stereo matching. In view of an epipolar plane intersecting the optical centers of the two cameras and the desired part in the real space, an area of the captured image to be searched for the corresponding point in the stereo matching can be limited to a line that is a projection of the epipolar plane on the captured image.

As for the stereo vision, in many cases, a parallel stereo method is used. In the parallel stereo method, two cameras are arranged such that the optical axes thereof are parallel to each other and a straight line (hereinafter referred to as "base line") connecting the optical centers of the cameras is perpendicular to the optical axes thereof. Hereinafter, the parallel stereo method in which a direction of the base line is identical to horizontal directions of the captured images created by the respective cameras is referred to as a parallel stereo method for simplifies the explanation.

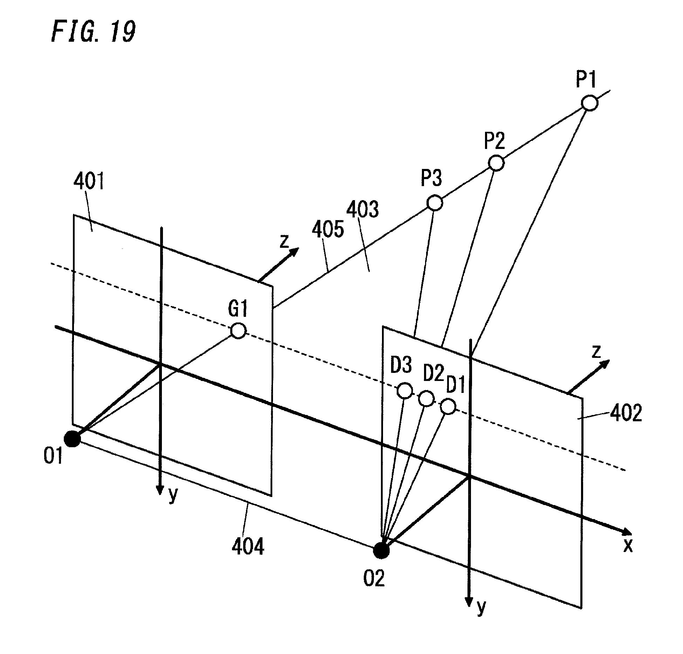

For example, it is assumed that the captured image does not suffer from distortion that is caused by an optical system (e.g., a lens) provided to a camera. In this case, as shown in **FIG. 19,** lines defined by projections of the epipolar plane **403** on the captured images **401** and **402** are straight lines that are parallel to horizontal direction of the captured images **401** and **402,** respectively. The epipolar plane **403** is formed corresponding to the desired part **P1** in the real space. In the following explanations, with regard to each of the captured images **401** and **402,** a horizontal direction is defined as an x-direction and a vertical direction is defined as a y-direction. Thus, the x-direction is parallel to a base line **404.** Hence, the straight lines obtained by projecting the epipolar plane **403** on the captured images **401** and **402** are parallel to the x-directions of the captured images **401** and **402,** respectively, and a coordinate of each straight line is constant in the y-direction.

When an image **G1** corresponding to the part **P1** in the real space is present in one captured image **401,** a scanning area for an image **D1** corresponding to the part **P1** present in the other captured image **402** is limited to a horizontal straight line that has the same coordinate in the y-direction as that of the image **G1.** For example, in **FIG. 19,** the image **G1** is on a straight line **405** that passes through the optical center **O1** of one camera and the image **G1.** Hence, parts **P1, P2,** and **P3** on this straight line **405** are corresponding to the image **G1,** for example. In contrast, straight lines that pass the optical center **02** of the other camera and the parts **P1, P2,** and **P3** are corresponding to the images **D1,** D2, D3 in the captured image **402,** respectively. In this regard, the image **G1** and the images **D1,** D2, D3 have the same coordinate in the y-direction.

As described above, according to the stereo matching with the parallel stereo method, the desired part in the real space is associated with positions that are the same in the vertical direction in the captured images from the respective cameras. In other words, when the two cameras take images of the same part in the real space, the positions of the pixels in the captured images corresponding to the part are different in the horizontal direction and the same in the vertical direction. In the parallel stereo method, it is sufficient that the captured images are searched in the horizontal direction for the points corresponding to the same part in the real space with regard to the captured images obtained by the cameras. Hence, the parallel stereo method has an advantageous effect that the processing efficiency of the stereo matching is improved.

The technique of the parallel stereo method described above stands on the assumption that optical systems of cameras have no distortion. Hence, the high processing efficiency of the stereo matching can be obtained only in the following cases. In one case, the angle of view is enough small in such an extent that an adverse effect due to distortion of the optical system of the camera is considered to be ignorable, and in the other case, even when the optical system has distortion, an adverse effect due to this distortion can be removed with correction. In other words, when the optical system (e.g., a fisheye lens) having large distortion is used to increase an angle of view, the processing load in the stereo matching is likely to be greatly increased.

Generally, an image taken by use of the optical system having a wide angle of view such as a fisheye lens shows curvature distortion in which curvature becomes greater towards a periphery of the image. Hence, in the stereo matching, it is necessary to search for the corresponding points in view of such curvature distortion. In other words, to search for the corresponding points, both the coordinate in the x-direction and the coordinate in the y-direction are changed. This is likely to cause a decrease in the processing efficiency of searching for the corresponding points, and further to cause an increase in the possibility that associating the desired part with the corresponding points results in failure. Consequently, there is a problem that the distance is missmeaured and this leads to a decrease in the measurement performance.

In order to solve the problem described above, there has been proposed the following technique. In this technique, a conversion image is created by performing coordinate conversion on the captured image such that the projection of the epipolar plane on the image is a straight line, and the stereo matching is performed by use of this conversion image. In this conversion image, the coordinate axes are determined such that the projection of the epipolar plane is a straight line parallel to a lateral axis (e.g., see document 1: JP 2007-24647 A, document 2: JP 2009-139246 A, and document 3: Fish-Eye-Stereo Calibration and Epipolar Rectification, Abraham, S. Forstner. W. International Journal of Photogrammetry and Remote Sensing, Vol. 59, Issue5, August 2005).

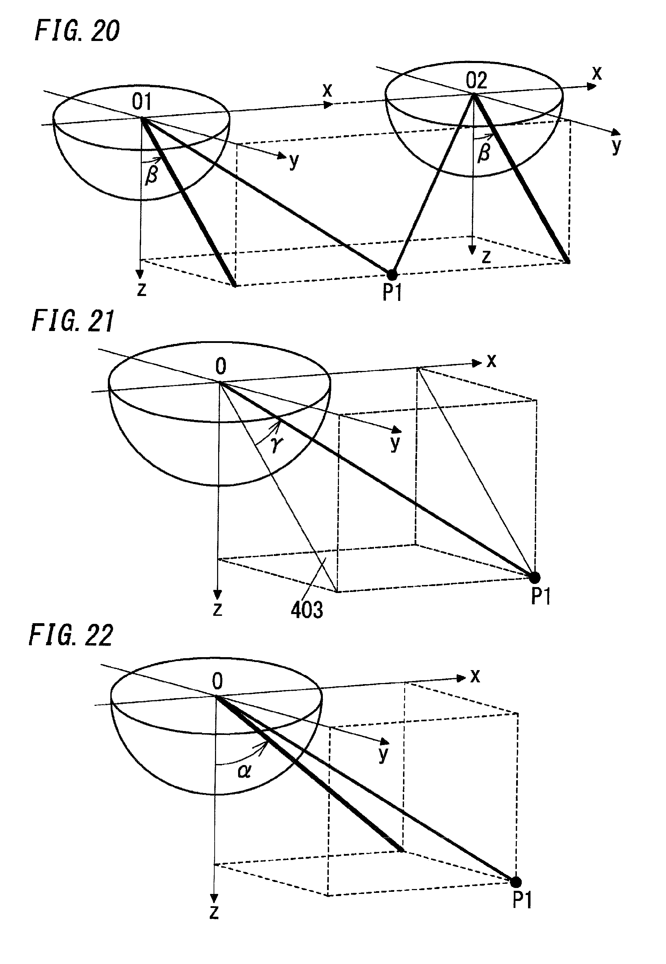

According to the techniques disclosed in documents 1 to 3, to efficiently estimate the disparity from the images having a wide angle of view, an angle β around an axis extending along the direction (x-direction) of the base line **404** is associated with a vertical axis of the conversion image, as shown in **FIG. 20**. Using such a conversion image enables associating the part **P1** in the three-dimensional real space with the same angle β with regard to the two captured images. Hence, like the parallel stereo method, the search for the corresponding points is facilitated, and therefore it is possible to efficiently estimate the disparity. Note that, a hemisphere shown in **FIG. 20** represents an optical system.

As shown in **FIG. 21,** documents 1 and 3 use, as the horizontal axis in the conversion image, an angle y within the epipolar plane **403**. This angle **y** is an angle of a straight line connecting the desired part **P1** and the optical center **O** of the camera with respect to a plane (yz-plane) defined by the vertical direction (y-direction) and the direction of the optical axis (z-direction) in the light receiving surface of the camera.

In contrast, as shown in **FIG. 22,** document 2 uses, as the horizontal axis in the conversion image, a tangent (tan α) of an angle α around an axis extending along the vertical direction (direction perpendicular to the directions of the base line **404** and the optical axis) of the captured image.

When a movement of a person in a room is detected with the technique of obtaining the three-dimensional information in the real space, such a detection result is applicable for control on a load device in the room, for example. For example, in a case of an air-conditioning load, by determining a location of a person in a room, it is possible to intensively supply cool air or warm air to the determined location of a person. Alternatively, in a case of a load device displaying an image, the load device can change a direction and/or a size of the image in accordance with the location of a person.

Also in cases other than the control of the load device, for the purpose of obtaining the three-dimensional information of the in-room space, to include an entire room in a field of view and avoid the interruption of line of sight by persons or objects, it is preferable that cameras are arranged around a center of a ceiling such that optical axes thereof are parallel to a vertical direction, for example. For example, it is preferable that cameras are arranged around a center of a ceiling such that optical axes thereof are parallel to a vertical direction. According to this arrangement, a lot of information regarding horizontal objects (such as floor surfaces and things on floor surfaces) can be obtained from the center region of the captured image, and a lot of information regarding vertical objects (such as wall surfaces and pillars) can be obtained from the peripheral region of the captured image.

By using the techniques disclosed in documents 1, 2, and 3 mentioned above, it is possible to reduce the adverse effect of distortion in the captured image caused by using the optical system having a wide angle of view. However, it remains impossible to sufficiently remove distortion in the captured image.

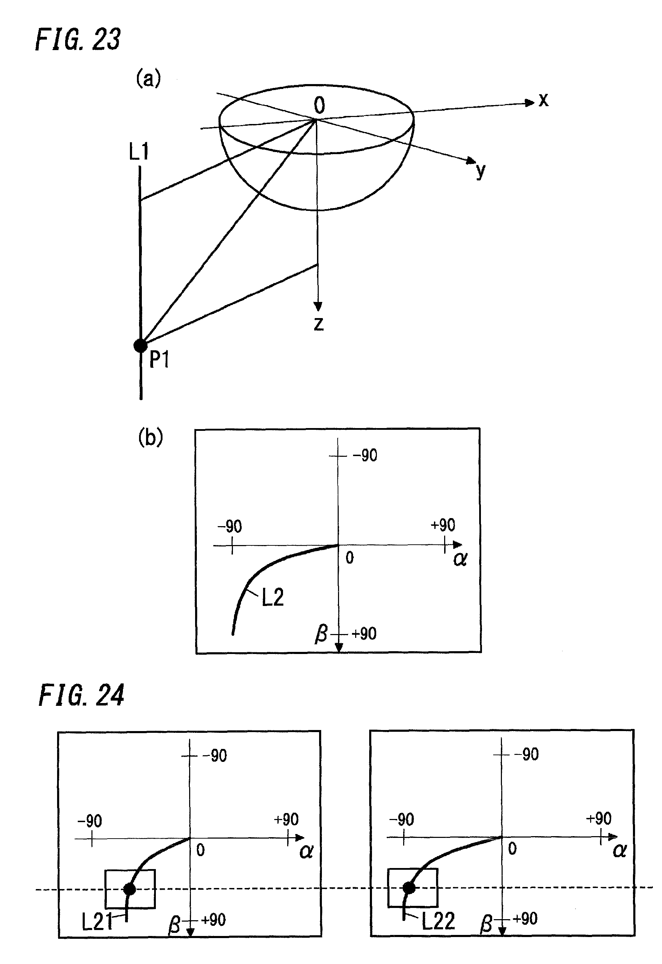

For example, as shown in **FIG. 23 (a),** an image of a straight line **L1** parallel to the optical axis (z-direction) is taken. In this case, as shown in **FIG. 23 (b),** the conversion image shows this line **L1** as a distorted curve line **L2. FIG. 23** shows an instance in accordance with document 1. In this conversion image, the angle **y** is associated with the horizontal axis, and the angle β is associated with the vertical axis. Hence, according to the technique disclosed in document **1,** the straight line **L1** is expressed as the curved line **L2** in the conversion image unless a relation of **ß=y** is satisfied. Likewise, such distortion is likely to occur in the conversion images disclosed in documents 2 and 3.

As can be seen from **FIG. 23 (b),** linearity is relatively high in the center region of the conversion image but is decreased in the peripheral region of the conversion image. For this reason, with regard to objects along the vertical direction such as walls and pillars present in the peripheral region of the conversion image, the efficiency of processing of searching for the corresponding points is decreased.

Additionally, as shown in **FIG. 24,** even when the image of the same straight line **L1** (see **FIG. 23**) are taken, this image is shown as the curved lines **L21** and **L22** having different shapes in the conversion images obtained from the respective two captured images. Hence, it is not easy to search the two conversion images for the corresponding points. In conclusion, the process of searching for the corresponding points is not easy even when any of the techniques of documents 1, 2, and 3 is used.

**Summary of Invention**

In view of the above insufficiency, the present invention has aimed to propose a stereo camera device and a computer-readable recording medium which can more facilitate a search for corresponding points of images taken by a plurality of cameras.

The stereo camera device of the first aspect in accordance with the present invention includes: a stereo camera unit; and an arithmetic processing unit. The stereo camera unit includes a pair of cameras for capturing images of a predetermined space, and is configured to provide the captured images respectively by the pair of cameras to the arithmetic processing unit. The arithmetic processing unit includes a first converter, a second converter, and a disparity estimation unit. The first converter is configured to convert the captured images by the pair of cameras into first conversion images. The first conversion image is defined as an image in which a position of a pixel is represented by two-dimensional orthogonal coordinates defined by a first angle around a first axis and a second angle around a second axis. The second converter is configured to convert the captured images by the pair of cameras into second conversion images. The second conversion image is defined as an image in which a position of a pixel is represented by two-dimensional orthogonal coordinates defined by the first angle and a third angle around a third axis. The first axis is defined by a straight line connecting optical centers of the pair of cameras to each other. The second axis is defined by an optical axis of the camera. The third axis is defined by an axis orthogonal to the first axis and the second axis. The disparity estimation unit is configured to calculate a disparity regarding a desired point in the space based on the first conversion images obtained by the first converter and the second conversion images obtained by the second converter.

With regard to the stereo camera device of the second aspect in accordance with the present invention, in addition to the first aspect, the disparity estimation unit is configured to calculate corresponding points regarding the desired point from the two first conversion images respectively corresponding to the pair of cameras, and calculate a first disparity regarding the desired point based on the corresponding points, and evaluate a first degree of coincidence between the corresponding points of the two first conversion images. The disparity estimation unit is configured to calculate corresponding points regarding the desired point from the two second conversion images respectively corresponding to the pair of cameras, and calculate a second disparity regarding the desired point based on the corresponding points, and evaluate a second degree of coincidence between the corresponding points of the two second conversion images. The disparity estimation unit is configured to compare the first degree of coincidence with the second degree of coincidence with regard to the same desired point, and select the first disparity as the disparity regarding the desired point when the first degree of coincidence is higher than the second degree of coincidence, and select the second disparity as the disparity regarding the desired point when the first degree of coincidence is lower than the second degree of coincidence.

With regard to the stereo camera device of the third aspect in accordance with the present invention, in addition to the second aspect, the arithmetic processing unit further includes a region evaluation unit. The region evaluation unit is configured to calculate a first evaluation value regarding a change in a luminance value with regard to a first pixel of the first conversion image and a second evaluation value regarding a change in a luminance value with regard to a second pixel of the second conversion image corresponding to the first pixel. The region evaluation unit is configured to calculate a difference between the first evaluation value and the second evaluation value and compare the difference with a predetermined threshold. The region evaluation unit is configured to compare the change in the luminance value of the first pixel and the change in the luminance value of the second pixel when the difference exceeds the threshold. The region evaluation unit is configured to select a first condition for the first pixel and the second pixel when the change in the luminance value of the first pixel exceeds the change in the luminance value of the second pixel. The region evaluation unit is configured to select a second condition for the first pixel and the second pixel when the change in the luminance value of the first pixel falls below the change in the luminance value of the second pixel. The region evaluation unit is configured to select a third condition for the first pixel and the second pixel when the difference is equal to the threshold or less. The region evaluation unit is configured to, when the first condition is selected for the first pixel and the second pixel, calculate the corresponding points by use of the first conversion images with regard to the first pixel and the second pixel. The region evaluation unit is configured to, when the second condition is selected for the first pixel and the second pixel, calculate the corresponding points by use of the second conversion images with regard to the first pixel and the second pixel. The region evaluation unit is configured to, when the third condition is selected for the first pixel and the second pixel, calculate the corresponding points by use of the first conversion images and the second conversion images with regard to the first pixel and the second pixel.

With regard to the stereo camera device of the fourth aspect in accordance with the present invention, in addition to the second aspect, the first converter is configured to decide a first extraction region used for extracting the corresponding point from the first conversion image in accordance with a predetermined first decision condition, and calculate a pixel value regarding a pixel included in the first extraction region, and not calculate a pixel value regarding a pixel not included in the first extraction region. The second converter is configured to decide a second extraction region used for extracting the corresponding point from the second conversion image in accordance with a predetermined second decision condition, and calculate a pixel value regarding a pixel included in the second extraction region, and not calculate a pixel value regarding a pixel not included in the second extraction region.

With regard to the stereo camera device of the fifth aspect in accordance with the present invention, in addition to any one of the first to fourth aspects, the stereo camera device includes a plurality of stereo camera units. The plurality of stereo camera units are arranged such that the first axes thereof cross each other and the second axes thereof are parallel to each other. The disparity estimation unit is configured to calculate the disparity regarding the desired point for each of the plurality of stereo camera units. The arithmetic processing unit includes a selection processing unit. The selection processing unit is configured to calculate a degree of reliability for each disparity calculated by the disparity estimation unit, and select the disparity having the highest degree of reliability from the disparities estimated by the disparity estimation unit.

With regard to the stereo camera device of the sixth aspect in accordance with the present invention, in addition to the fifth aspect, one of the two cameras of one of the plurality of stereo camera units is used as one camera of another stereo camera unit.

The computer-readable recording medium of the seventh aspect in accordance with the present invention is a computer-readable recording medium storing a program used in a computer connected to a stereo camera unit. The stereo camera unit includes a pair of cameras for capturing images of a predetermined space, and is configured to provide the captured images respectively by the pair of cameras to the arithmetic processing unit. The pair of cameras are arranged such that optical axes thereof are parallel to each other and fields of view thereof are overlapped with each other. The program is designed to have the computer functions a first converter, a second converter, and a disparity estimation unit. The first converter is configured to convert the captured images by the pair of cameras into first conversion images. The first conversion image is defined as an image in which a position of a pixel is represented by two-dimensional orthogonal coordinates defined by a first angle around a first axis and a second angle around a second axis. The second converter is configured to convert the captured images by the pair of cameras into second conversion images. The second conversion image is defined as an image in which a position of a pixel is represented by two-dimensional orthogonal coordinates defined by the first angle and a third angle around a third axis. The first axis is defined by a straight line connecting optical centers of the pair of cameras to each other. The second axis is defined by an optical axis of the camera. The third axis is defined by an axis orthogonal to the first axis and the second axis. The disparity estimation unit is configured to calculate a disparity regarding a desired point in the space based on the first conversion images obtained by the first converter and the second conversion images obtained by the second converter.

**Brief Description of the Drawings**

FIG. 1 is a block diagram illustrating the stereo camera device of the first embodiment;
FIG. 2 is a diagram illustrating the principle of the above embodiment;
FIG. 3 is a diagram illustrating the relation regarding the coordinate system used in the above embodiment;
FIG. 4 is a diagram illustrating the relation regarding the coordinate system used in the above embodiment;
FIG. 5 is a diagram illustrating an example of the image in the above embodiment;
FIG. 6 is a diagram illustrating an example of the first conversion image in the above embodiment;
FIG. 7 is a diagram illustrating an example of the second conversion image in the above embodiment;
FIG. 8 is a diagram illustrating block matching in the above embodiment;

FIG. **9** is a diagram illustrating block matching in the above embodiment;
FIG. **10** is a diagram illustrating the outline of the operation of the above embodiment;
FIG. **11** is a block diagram illustrating the stereo camera device of the second embodiment;
FIG. **12** is a diagram illustrating the operation of the above embodiment;
FIG. **13** is a diagram illustrating an example of the regions obtained by dividing in the above embodiment;
FIG. **14** is a diagram illustrating the regions in the stereo camera device of the third embodiment;
FIG. **15** is a diagram illustrating the region in the above embodiment;
FIG. **16** is a block diagram illustrating the stereo camera device of the fourth embodiment;
FIG. **17** is a schematic diagram illustrating the configuration of the stereo camera device of the fifth embodiment;
FIG. **18** is a block diagram illustrating the above embodiment;
FIG. **19** is a diagram illustrating the concept of the stereo vision;
FIG. **20** is a diagram illustrating the prior art;
FIG. **21** is a diagram illustrating the coordinate system used in the above prior art;
FIG. **22** is a diagram illustrating the coordinate system used in the above prior art;
FIG. **23** is a diagram illustrating the operation of the above prior art; and
FIG. **24** is a diagram illustrating the operation of the above prior art.

**Description of Embodiments**

(FIRST EMBODIMENT)

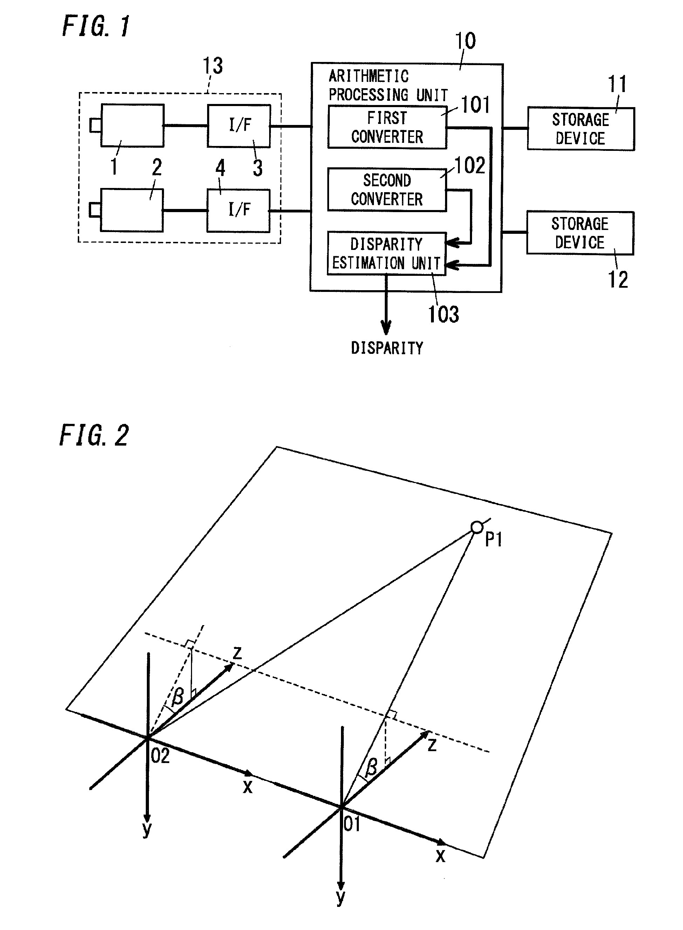

As shown in **FIG. 1,** the stereo camera device of the present embodiment includes: a stereo camera unit **13** including a pair of cameras (a first camera and a second camera) **1** and **2;** an arithmetic processing unit **10;** and storage devices **11** and **12.** The stereo camera device of the present embodiment is described in detail below.

As shown in **FIG. 1,** the stereo camera device of the present embodiment includes the two cameras (first and second cameras) **1** and **2** arranged such that fields of view thereof are substantially overlapped with each other with regard to a three-dimensional real space. The cameras **1** and **2** are arranged such that optical axes thereof are parallel to each other and are orthogonal to a direction (base line direction) of a straight line connecting optical center (imaging center) thereof.

The cameras **1** and **2** are arranged to have the optical axes parallel to each other. Further, the cameras **1** and **2** are arranged such that a straight line (base line) connecting the optical centers **O1** and **02** of the respective cameras **1** and **2** is orthogonal to the optical axes of the respective cameras **1** and **2.** Furthermore, the cameras **1** and **2** are arranged such that the fields of view thereof are overlapped with each other.

Each of the cameras **1** and **2** includes an optical system that has the same function as or substantially the same function as a fisheye lens with an angle of view of approximately 180°. The projection of the optical system is not limited to particular one, but the following explanation is made based on the equidistance projection. Further, each of the two cameras **1** and **2** is positioned such that a horizontal direction of a light receiving surface (imaging surface) is identical to the base line direction. In brief, the present embodiment relates to the parallel stereo method.

Besides, in the following, with regard to the three-dimensional real space, a direction (i.e., the base line direction) extending along the horizontal direction of the light receiving surface is defined as an x-direction, and a direction extending along a vertical direction of the light receiving surface is defined as a y-direction, and a direction normal to the light receiving surface is defined as a z-direction. Notably, the horizontal direction of the light receiving surface means a direction of a first axis of a two-dimensional orthogonal coordinate system defining the light receiving surface, but does not mean a horizontal direction of the real space. The vertical direction of the light receiving surface means a direction of a second axis of the two-dimensional orthogonal coordinate system defining the light receiving surface, but does not mean a vertical direction of the real space.

The coordinate system is determined such that a right direction in the horizontal direction is identical to a positive direction in the x-direction and a downward direction in the vertical direction is identical to a positive direction in the y-direction when a captured image by each camera is displayed by a monitoring device. With regard to the z-direction, a positive direction is selected as a direction away from the light receiving surface of the camera. In other words, the positive direction in the z-direction is identical to a front direction of the camera.

For example, a position of a pixel in the captured image by each of the cameras **1** and **2** is represented by use of a first coordinate system (image coordinate system) defined as a two-dimensional orthogonal coordinate system in which an upper-left corner of the light receiving surface (imaging surface) is selected as an original point. The first coordinate system is determined such that the horizontal direction of the image (captured image) extends along the x-direction and the vertical direction of the image (captured image) extends along the y-direction. Thus, the position of the pixel of the captured image is represented by a set of coordinates ($u$, $v$). Notably, the horizontal direction of the captured image means a direction of a first axis of the first coordinate system, but does not mean the horizontal direction of the real space. The vertical direction of the captured image means a direction of a second axis of the first coordinate system, but does not mean the vertical direction of the real space.

Additionally, to determine a viewing direction from each of the cameras **1** and **2** to a desired area (e.g., a point **P1** in **FIG. 2**) in the real space, a set of axes (a first axis, a third axis, and a second axis) respectively parallel to the x-direction, the y-direction and the z-direction which are mentioned above is determined for each of the cameras **1** and **2**. Hence, a second coordinate system (camera coordinated system) having an original point defined by an optical center of a camera is determined for each of the cameras **1** and **2**.

The second coordinate system is selected for each of the cameras **1** and **2,** and has the axis (second axis) extending along the z-direction identical to an optical axis.

The viewing direction (visual direction) from the original point (optical center) **O1, O2** of the second coordinate system determined for the camera **1, 2** to the point (desired point) **P1** is represented by a combination of angles around the respective three axes. In the following, the angle (first angle) around the axis along the x-direction is denoted by **ß**, and the angle (third angle) around the axis along the y-direction is denoted by $\alpha$, and the angle (second angle) around the axis (optical axis) along the z-direction is denoted by $\varphi$.

In summary, the axis along the x-direction is the axis (first axis) defined by the straight line connecting the optical centers **O1** and **O2** of the pair of cameras **1** and **2**. As for the camera **1,** the axis along the z-direction is the axis (second axis) defined by the optical axis of the camera **1**. As for the camera **2,** the axis along the z-direction is the axis (second axis) defined by the optical axis of the camera **2**. The axis along the y-direction is the axis (third axis) orthogonal to the first axis (axis along the x-direction) and the second axis (axis along the z-direction).

Data of the captured images by the respective cameras **1** and **2** is inputted into the arithmetic processing unit **10.**

In the present embodiment, an example where the arithmetic processing unit 10 processes a grayscale image is described. Besides, the technical concept described below is available for an example where a color image is processed.

The arithmetic processing unit **10** includes a computer as a hardware resource, and executes a program that enables the computer to function as a device for performing a process described below. Besides, the arithmetic processing unit **10** may be a device including dedicated hardware. Alternatively, the arithmetic processing unit **10** may be constituted by a device having a function of performing a program such as a DSP (Digital Signal Processor) and a FPGA (Field-Programmable Gate Array), instead of a computer including a microcomputer.

Interposed between the camera **1** and the arithmetic processing unit **10** is an interface **3** and interposed between the camera **2** and the arithmetic processing unit **10** is an interface **4.**

The interfaces **3** and **4** convert the data of the captured images by the cameras **1** and **2** into data suitable for processing by the arithmetic processing unit **10,** respectively. For example, each of the interfaces **3** and **4** has a function of converting an analog signal into a digital signal.

A system program and an application program used for operating the arithmetic processing unit **10** are stored in the storage device (first storage device) **11.** The data of the captured image and the data produced in the arithmetic processing which are to be processed by the arithmetic processing unit **10** are stored in the storage device (second storage device) **12** which is a data memory and a working memory.

The storage device **11** is a storage device that can retain stored information even when not powered, such as a flash memory and a hard disk drive. Further, the storage device **11** includes a volatile memory used as a main storage used for storing a system program and an application program only when the processing is performed.

The storage device **12** is not limited to a particular memory, but at least a part thereof may include a volatile memory used for working.

In the present embodiment, to obtain three-dimensional information of the real space based on the captured images respectively by the two cameras **1** and **2,** the arithmetic processing unit **10** sends trigger signals to the respective interfaces **3** and **4** to allow the two cameras **1** and **2** to capture the images simultaneously. The arithmetic processing unit **10** stores the pair of captured images at the same time in the storage device **12.**

With regard to each of the cameras **1** and **2,** the position of the pixel on the light receiving surface is represented by the numbers of pixels in the horizontal direction and the vertical direction while the upper left corner point is determined as the original point. When a point on the optical axis projected onto the image is represented by a set of coordinates (**uc, vc**), a distance **r** between the set of coordinates (**uc,** vc) and a desired pixel (**u, v**) is represented by the following formula (1).

[FORMULA 1]

$$r = \sqrt{(u - uc)^2 + (v - vc)^2} \qquad (1)$$

Besides, each of the cameras **1** and **2** includes the optical system that has the same or substantially the same function as a fisheye lens. Hence, it is possible to use a model in which a point in the three-dimensional real space is projected onto a spherical surface which has a radius of 1 and is centered at the optical center of the camera **1, 2.**

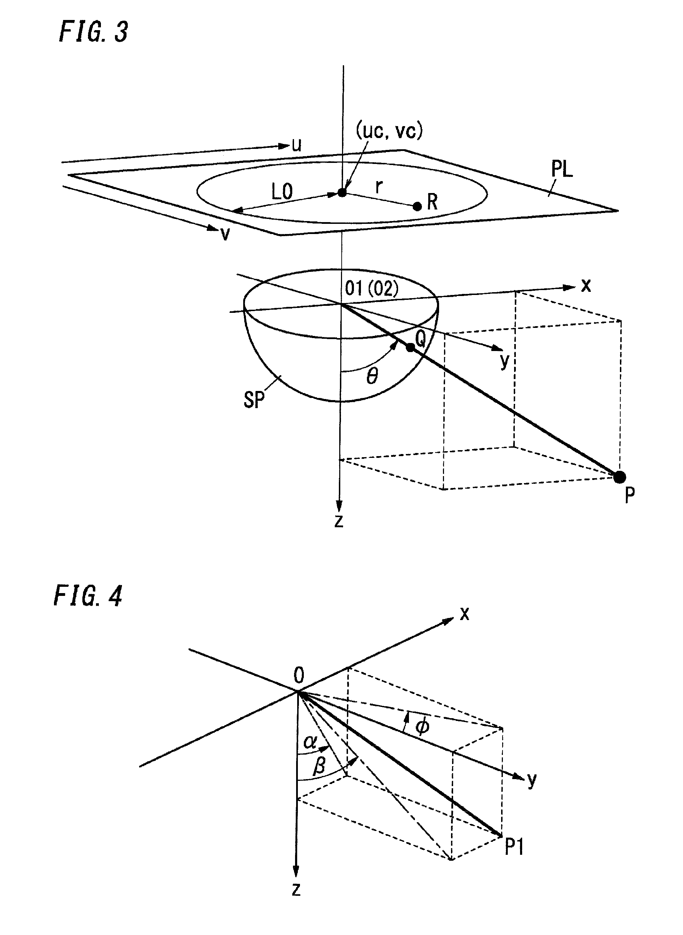

For example, equidistance projection type fisheye lenses that do not cause distortion are used as the optical systems of the cameras **1** and **2.** In this case, an angle θ [rad] as shown in **FIG. 3** is expressed by the following formula (2) using the distance **r.** The angle θ [rad] is defined as an angle between the optical axis (axis extending in the z-direction) and a straight line that connects a point **Q** and the optical center (original point in the second coordinate system) **O1** (o**2**). The point **Q** is the projection of a point **P** in the real space on a spherical surface **SP.**

[FORMULA 2]

$$\theta = \frac{\pi \cdot r}{2 \cdot L0} \qquad (2)$$

Note that, in the above formula (2), a distance **L0** represents a radius of a circle which is obtained by projecting points that have **Z=0** in the three-dimensional space on an image **PL.** A point **R** represents a position of a pixel that is corresponding to the projection of the point **Q** on the image **PL.**

When calibration is made such that a point in the real space is associated with a pixel at a position (**u, v**) in the captured image, a position of a point **P1** that is the projection of a point in the real space on the spherical surface used as a model is represented by a set of coordinates (**X, Y, Z**). The coordinates **X, Y,** and **Z** are expressed by the following formulae (3), (4), and (5), respectively.

[FORMULA 3]

$$X = \frac{u - uc}{r} \sin \theta \qquad (3)$$

$$Y = \frac{v - vc}{r} \sin \theta \qquad (4)$$

$$Z = \cos \theta \qquad (5)$$

As shown in **FIG. 4,** the position (**X, Y, Z**) of the point **P1** can be expressed by a combination of angles around two of three axes including an x-axis, a y-axis, and a z-axis, instead of the position (u, v) of the pixel. As mentioned above, an angle around the x-axis (angle in a yz-plane) is denoted by **ß**, and an angle around the y-axis (angle in a zx-plane) is denoted by "α", and an angle around the z-axis (angle in a xy-plane) is denoted by φ. The angles α and **B** are 0 degree when the point **P1** on the z-axis, and increase when the point **P1** rotates counterclockwise. The angles φ is 0 degree when the point **P1** on the y-axis, and increase when the point **P1** rotates counterclockwise. Two different combinations of the angles (φ, **ß**) and (α, **ß**) are used as an alternative to the position (**u, v**) of the pixel. Conversion formulae to calculate the angles α, **ß**, and φ are respectively expressed by the following formulae (6), (7), and (8) by using calculation results of the above formulae (3), (4), and (5).

[FORMULA 4]

$$\alpha = \tan^{-1}\left(\frac{X}{Z}\right) \qquad (6)$$

$$\beta = \tan^{-1}\left(\frac{Y}{Z}\right) \qquad (7)$$

$$\phi = \tan^{-1}\left(\frac{X}{Y}\right) \qquad (8)$$

The arithmetic processing unit 10 includes a first converter **101** and a second converter **102** to create images defined by the sets of the angles (φ, **ß**) and (α, **ß**) in the aforementioned three-dimensional space converted from the position (u, v) of the pixel in each of the captured images respectively taken by the two cameras **1** and **2**.

The first converter **101** produces an image (hereinafter referred to as "first conversion image") in which a position of a pixel is represented by the set (φ, **ß**) of the angle (second angle) φ around the z-axis (optical axis) and the angle (first angle) **ß** around the x-axis. The first converter **101** is configured to convert the captured images by the pair of cameras **1** and **2** into the first conversion images. In other words, the first converter **101** converts the captured image by the first camera **1** into the first conversion image and coverts the captured image by the second camera **2** into the first conversion image. In the present embodiment, the first converter **101** creates the two first conversion images.

Additionally the second converter **102** produces an image (hereinafter referred to as "second conversion image") in which a position of a pixel is represented by the set (α, **ß**) of the angle (third angle) α around the y-axis and the angle (first angle) **ß** around the x-axis. The second converter **102** is configured to convert the captured images by the pair of cameras **1** and **2** into the second conversion images. In other words, the second converter **102** converts the captured image by the first camera **1** into the second conversion image and coverts the captured image by the second camera **2** into the second conversion image. In the present embodiment, the second converter **102** creates the two second conversion images.

The angle (first angle) **ß** is calculated by the first converter **101**. When the calculation by the second converter **102** is subsequent to the calculation by the first converter **101,** the second converter **102** can obtain the angle **ß** from the first converter **101.**

As the pixel value of the first conversion image, a pixel value of a pixel at a position in the receiving surface of the camera **1** or **2** that is corresponding to the position (coordinates) (φ, **ß**) calculated by the first converter **101** is used. As the pixel value of the second conversion image, a pixel value of a pixel at a position in the receiving surface of the camera **1** or **2** that is corresponding to the position (coordinates) (α, **ß**) calculated by the second converter **102** is used.

In summary, the first converter **101** calculates the position (coordinates) (**u, v**) of the pixel of the captured image from the position (coordinates) (φ, **ß**) of the pixel of the first conversion image, and creates the first conversion image in which the pixel value of the pixel at the position (φ, **ß**) is associated with the pixel value of the pixel of the captured image positioned at the calculated position (**u, v**).

Additionally, the second converter **102** calculates the position (coordinates) (**u, v**) of the pixel of the captured image from the position (coordinates) (α, **ß**) of the pixel of the second conversion image, and creates the second conversion image in which the pixel value of the pixel at the position (α, **ß**) is associated with the pixel value of the pixel of the captured image positioned at the calculated position (**u, v**).

To create the first conversion image and the second conversion image, the process of calculating the pixel value is performed on all of the positions (φ, **ß**), (α, **ß**).

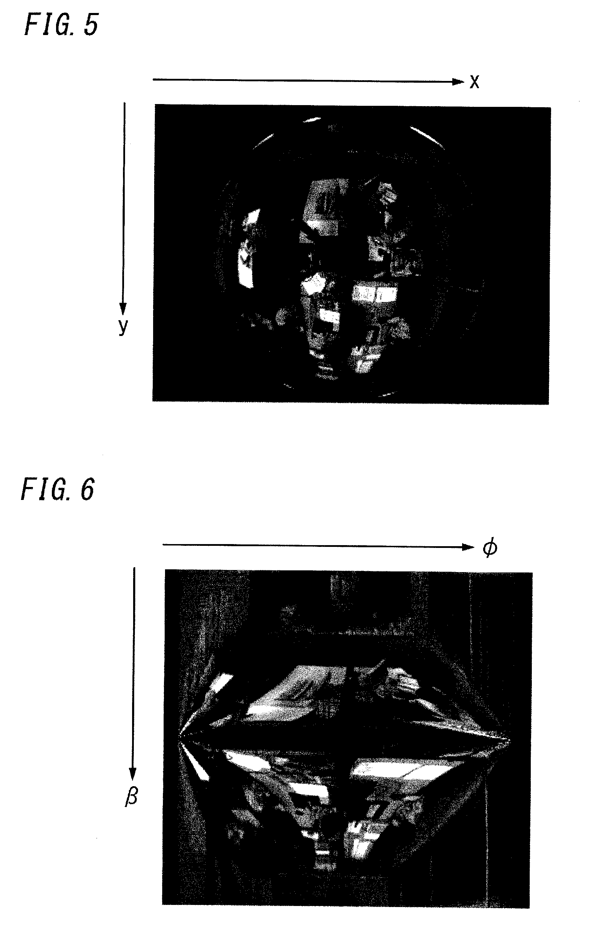

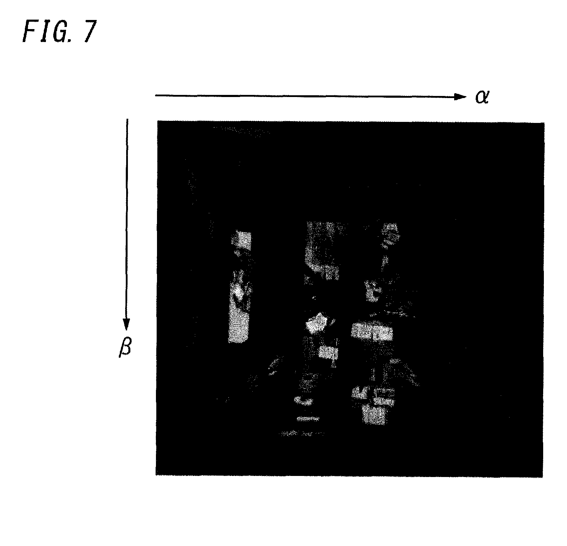

When the captured image shown in **FIG. 5** is obtained, the first conversion image shown in **FIG. 6** is created and the second conversion image shown in **FIG. 7** is created.

**FIG. 5** shows the captured image of the entire room taken by the camera **1, 2** installed in the center of the ceiling of in the room.

When the cameras **1** and **2** are installed in an aforementioned manner, as shown in **FIG. 6,** in the first conversion image, one region such as wall surfaces and pillars extending along the vertical direction at the opposite ends in the longitudinal direction (ß-direction) is less distorted than the other region.

In contrast, as shown in **FIG. 7,** in the second conversion image, one region such as floor surfaces and upper surface of desks extending along the horizontal direction at the center is less distorted than the other region.

The positions (**u, v**) of the pixels are determined from of the positions (φ, **ß**) and (α, **ß**) calculated by the first converter **101** and second converter **102,** respectively. However, in many cases, the position is not corresponding to one pixel only.

Hence, to calculate the pixel values of the first conversion image and the second conversion image, interpolation calculation is necessary. The interpolation calculation may be conducted with bilinear interpolation or a general algorithm such as a nearest neighbor algorithm.

The grayscale image is stored in the storage device **12**. Hence, the pixel value of the position (**u, v**) is a luminance value and therefore the pixel values of the first conversion image and the second conversion image are also luminance values.

The first conversion images provided from the first converter **101** and the second conversion images provided from the second converter **102** are stored in the storage device **12**.

The arithmetic processing unit **10** includes a disparity estimation unit **103** for estimating a disparity between the cameras **1** and **2** by use of the first conversion images and the second conversion images stored in the storage device **12.**

The disparity estimation unit **103** estimates a disparity (first disparity) from the first conversion images obtained from the captured images taken by the respective cameras **1** and **2,** and also estimates a disparity (second disparity) from the second conversion images. Further, the disparity estimation unit **103** determines the final disparity in view of the disparities calculated with the two different methods. The resultant disparity is used for calculation of three-dimensional information of the real space.

The disparity estimation unit **103** estimates a disparity for each pixel from the two first conversion images produced by the respective two cameras **1** and **2,** and creates a single image (hereinafter referred to as "first disparity image") having pixel values corresponding to values of the estimated disparities. Further, the disparity estimation unit **103** estimates a degree of coincidence for each pixel, and creates a single image (hereinafter referred to as "first coincidence image") having pixel values corresponding to the estimated degrees of coincidence.

Similarly, the disparity estimation unit **103** estimates a disparity and a degree of coincidence for each pixel from the two second conversion images, and creates a single image (hereinafter referred to as "second disparity image") having pixel values corresponding to values of the estimated disparities and a single image (hereinafter referred to as "second coincidence image") having pixel values corresponding to the estimated degree coincidence.

To determine the disparity, the disparity estimation unit **103** uses the first disparity image and the second disparity image.

In the first conversion image, the axis extending in the vertical direction of the image is associated with the angle (first angle) **ß** around the x-axis, and the axis extending in the horizontal direction of the image is associated with the angle (second angle) φ around the z-axis (optical axis). In the parallel stereo method, as shown in **FIG. 2,** when the two cameras **1** and **2** capture images of the same point (desired point) in the real space, the angles **ß** in the first conversion images are same. Hence, to estimate the corresponding points from the two first conversion images, it is sufficient to search an area having the same angle **ß**.

Thus, in a process of estimating the corresponding points, the disparity estimation unit 103 can narrow a search area by use of the first conversion images.

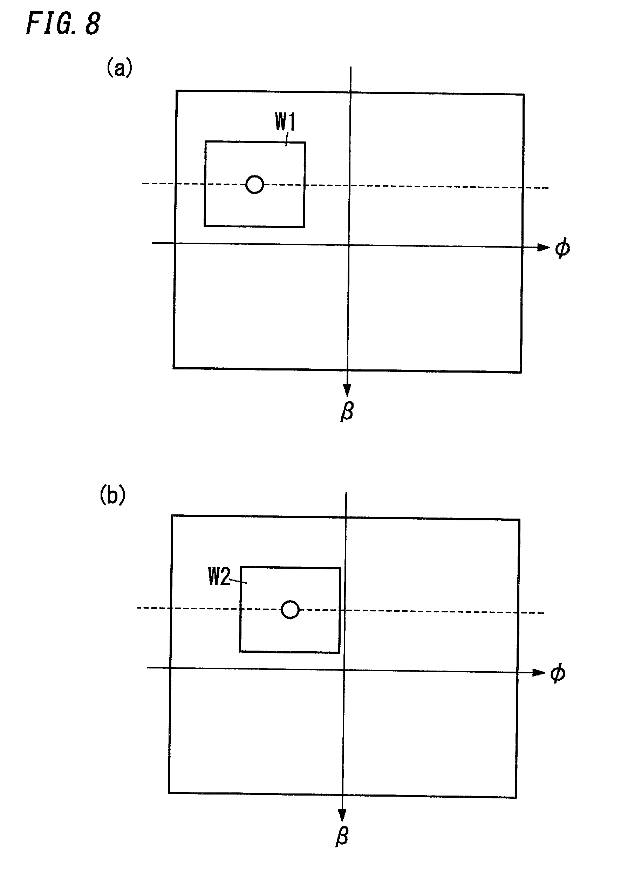

To judge whether points are the corresponding points, the disparity estimation unit **103** uses a block-matching technique. For example, as shown in **FIG. 8 (a)**, in one first conversion image (e.g., the first conversion image associated with the first camera **1**), a window **W1** including a plurality of pixels is formed to surround a part to be subjected to estimation of the corresponding points. It is preferable that the window **W1** is formed as a rectangular or square area surrounding a pixel to be subjected to estimation of the corresponding points.

Further, as shown in **FIG. 8 (b)**, in the other first conversion image (e.g., the first conversion image associated with the second camera **2**), a scanning area **W2** having a size corresponding to the size of the window **W1** is formed. The scanning area **W2** is moved along the lateral axis (axis associated with the angle φ).

Since the angles **ß** of the corresponding points in the two first conversion images are same as mentioned above, the search for the corresponding points is conducted by varying only the angle φ.

When the center position of the window **W1** is a position (φL, **ßL**) and the center position of the scanning area **W2** is a position (φR, **ßR**), the SAD value **Vs** is calculated with regard to a position (**j, i**) of a pixel in the scanning area **W2** corresponding to a relative position (**j, i**) of a pixel in the window **W1**. The SAD value Vs is defined as the sum of differences (absolute values) between the pixel values (luminance values) **I1** (φL+j, ßL+i) and **I2** (φR+j, BR+i)**.**

In the parallel stereo method, **ßL** is equal to **ßR**. When a relative position of each window center is defined as (0, 0), the SAD (Sum of Absolute Difference) value **Vs** is expressed by the following formula (9). In this regard, the window **W1** and the scanning area **W2** have the same size of (**2m+1, 2n+1**) (m and n are integers equal to 0 or more).

[FORMULA 5]

$$\sum_{j=-m}\sum_{i=-n}\left|I1(\phi L+j,\beta L+i)-I2(\phi R+j,\beta R+i)\right| \qquad (9)$$

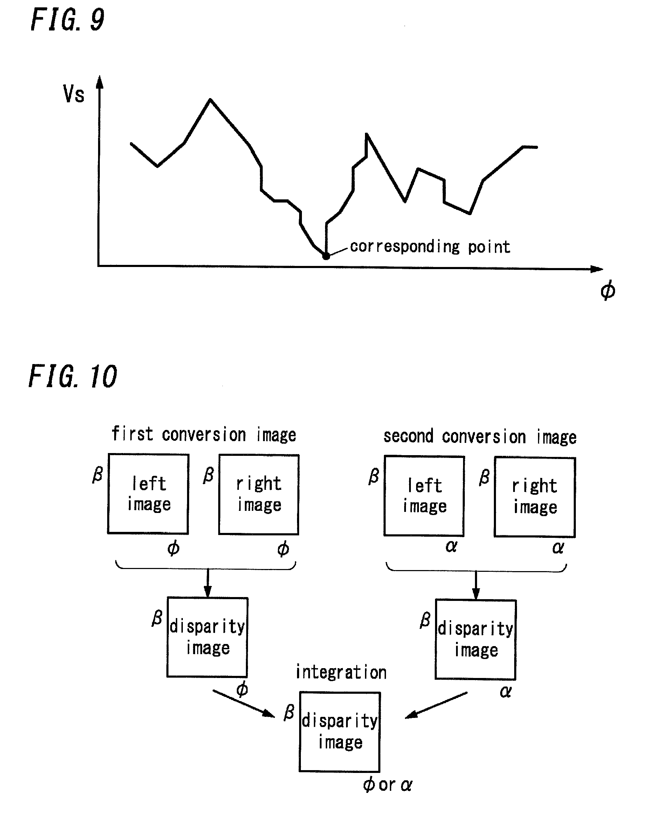

As shown in **FIG. 9,** the SAD value **Vs** changes along with movement of the scanning area **W2** along the lateral axis of the first conversion image. When the scanning area **W2** is positioned at a position in which the degree of coincidence between the pixel values of the pixels included in the scanning area **W2** and the pixel values of the pixels included in the window **W1** is high, the SAD value **Vs** has its minimum.

In view of this, when the SAD value **Vs** is equal to a prescribed threshold or less and has its minimum within the search area, the disparity estimation unit **103** determines that the center position of the scanning area **W2** is the corresponding point. Note that, when the SAD value **Vs** has its minimum but is not equal to the threshold or less, the disparity estimation unit 103 treats the corresponding point as being undetermined.

For example, the window **W1** has the center position ($\varphi$**L1, ßL1**). Further, it is assumed that the SAD value **Vs** is not greater than the prescribed threshold and has its minimum within the search area when the scanning area **W2** has the center position ($\varphi$**R1, ßR1**).

In this case, the pixel ($\varphi$**R1, ßR1**) in the first conversion image associated with the second camera **2** is selected as the corresponding point to the pixel ($\varphi$**L1, ßL1**) in the first conversion image associated with the first camera **1**.

In other words, the pixel ($\varphi$**L1, ßL1**) in the first conversion image associated with the first camera **1** is selected as the corresponding point to the pixel ($\varphi$**R1, ßR1**) in the first conversion image associated with the first camera **1**.

In summary, in the present embodiment, the disparity estimation unit **103** selects arbitrarily one pixel in the first conversion image associated with the first camera **1** as the corresponding point to the desired point **P1**. The disparity estimation unit **103** searches the first conversion image associated with the second camera **2** for the corresponding point to the desired point **P1** that is corresponding to the selected pixel.

In this manner, the disparity estimation unit **103** determines the corresponding point to the desired point **P1** for each of the two first conversion images.

When obtaining the corresponding points by use of the first conversion images, the disparity estimation unit **103** calculates the disparity (first disparity) between the two cameras **1** and **2** with regard to the point (desired point) **P1** by use of the coordinate positions of the corresponding points in the respective two first conversion images

When calculating the disparities, the disparity estimation unit **103** creates the first disparity image having the pixel values indicative of the disparities.

Further, the disparity estimation unit **103** calculates the degree of coincidence Ds expressed by the following formula (**10**), for each set of corresponding points obtained by use of the first conversion images. In other words, the disparity estimation unit **103** calculates the degree of coincidence **Ds** between the corresponding points of the respective two first conversion images.

The degree of coincidence **Ds** is calculated for all of the pixels in the first conversion image which have the corresponding points, and then the first coincidence image having the pixel values indicative of the degrees of coincidence **Ds** is created.

[FORMULA 6]

$$Ds = \frac{1}{Vs} \qquad (10)$$

The disparity estimation unit **103** calculates the corresponding points from the second conversion images by use of the SAD value **Vs** in a similar manner as the first conversion images. With regard to the second conversion images, the disparity estimation unit **103** calculates the disparity for each set of corresponding points to create the second disparity image, and calculates the degree of coincidence **Ds** for each set of corresponding points to create the second coincidence image having the pixel values representing the degrees of coincidence **Ds.**

In summary, the disparity estimation unit **103** determines the corresponding point to the desired point **P1** for each of the two second conversion images. When obtaining the corresponding points by use of the second conversion images, the disparity estimation unit **103** calculates the disparity (second disparity) between the two cameras **1** and **2** with regard to the point (desired point) **P1** by use of the coordinate positions of the corresponding points in the respective two second conversion images. When calculating the disparities, the disparity estimation unit 103 creates the second disparity image having the pixel values indicative of the disparities.

Further, the disparity estimation unit **103** calculates the degree of coincidence **Ds** expressed by the above formula (10), for each set of corresponding points obtained by use of the second conversion images. In other words, the disparity estimation unit **103** calculates the degree of coincidence **Ds** between the corresponding points of the respective two second conversion images.

The first disparity image and the first coincidence image as well as the second disparity image and the second coincidence image are stored in the storage device **12**.

Next, the disparity estimation unit **103** determines the disparity by use of the first disparity image and the second disparity image. To determine the disparity, the disparity estimation unit **103** extracts, from the second disparity image, the pixels respectively corresponding to the pixels of the first disparity image, and judges whether the corresponding pixels have the pixel values (disparities).

The disparity estimation unit **103** extracts from the second disparity image the pixel corresponding to the pixel of the first disparity image by use of the following equations. For example, when the position of the pixel of the first disparity image is represented as ($\varphi$**1, ß1**), the position of the corresponding pixel of the second disparity image is represented as ($\alpha$**2, ß2**). In this case, $\alpha$**2** and **ß2** are respectively represented by the following formulae (11) and (12).

[FORMULA 7]

$$\alpha 2 = \tan^{-1}\left(\tan\phi 1 \cdot \tan\beta 1\right) \qquad (11)$$

$$\beta 2 = \beta 1 \qquad (12)$$

The disparity estimation unit **103** evaluates a degree of reliability of a pixel value for each pixel value by use of the first coincidence image and the second coincidence image, provided that the corresponding pixels of the first disparity image and the second disparity image have the pixel values.

For example, it is assumed that the position ($\varphi$**1, ß1**) in the first disparity image and the position ($\alpha$**2, ß2**) in the second disparity image have the pixel values (disparities). In this case, the disparity estimation unit **103** compares the pixel value (degree of coincidence) of the position ($\varphi$**1, ß1**) in the first coincidence image with the pixel value (degree of coincidence) of the position ($\alpha$**2, ß2**) in the second coincidence image.

When the degree of coincidence of the first coincidence image is greater than the degree of coincidence of the second coincidence image, the disparity estimation unit **103** selects the pixel value of the position ($\varphi$**1, ß1**) in the first disparity image as the disparity, and updates the pixel value of the position ($\alpha$**2, ß2**) in the second disparity image as an undetermined value.

Similarly, when the degree of coincidence of the second coincidence image is greater than the degree of coincidence of the first coincidence image, the disparity estimation unit **103** selects the pixel value of the position ($\alpha$**2, ß2**) in the second disparity image as the disparity, and updates the pixel value of the position ($\varphi$**1, ß1**) in the first disparity image as an undetermined value.

When the degrees of coincidence are the same, the disparity estimation unit 103 selects as the disparity an average or one of the pixel values of the position ($\varphi$**1, ß1**) in the first disparity image and the position ($\alpha$**2, ß2**) in the second disparity image.

When one of the position ($\varphi$**1, ß1**) in the first disparity image and the position ($\alpha$**2, ß2**) in the second disparity image has the pixel value (disparity), the disparity estimation unit **103** selects this pixel value as the disparity.

When the corresponding pixels of the first disparity image and the second disparity image have no pixel values, the disparity estimation unit **103** concludes that the disparity at the selected position is undetermined.

By performing the aforementioned process, the pixel value (disparity) of one that has the higher degree of reliability (i.e., the degree of coincidence) of the first disparity image and the second disparity image is selected for each pixel. Hence, by calculating the three-dimensional position in the real space by use of the selected pixel values, it is possible to obtain the three-dimensional information that is highly reliable.

**FIG. 10** shows a schematic diagram illustrating the operation of the stereo camera device of the present embodiment. According to this diagram, the two first conversion images (images each defined by **ß** and $\varphi$) and the two second conversion images (images each defined by **ß** and $\alpha$) are obtained from the two captured images created by the left and right cameras **1** and **2**. Thereafter, the disparity image (first disparity image) is derived from the two first conversion images and the disparity image (second disparity image) is obtained from the two second conversion images. With integration of the two resultant disparity images, the single disparity image is obtained.

The stereo camera device of the present embodiment described above includes the plurality of cameras **1** and **2,** and the arithmetic processing unit **10**. The plurality of cameras **1** and **2** are arranged such that optical axes thereof are parallel to each other and the fields of view thereof are overlapped with each other. To calculate the three-dimensional information of a part (desired part) **P1** in the field of view from the plurality of captured images respectively taken by the cameras **1** and **2,** the arithmetic processing unit **10** calculates the disparity regarding the part (desired point) **P1**. In the stereo camera device of the present embodiment, the first coordinate system and the second coordinate system are used. The first coordinate system is a coordinate system defined such that a position of a pixel of the captured image is determined by the two-dimensional orthogonal coordinates defined in the light receiving surface, for each of the cameras **1** and **2**. The second coordinate system is a coordinate system defined such that the viewing direction (i.e., the visual direction of the camera **1, 2**) from the original point (optical center) **01** (**02**) to the part (desired point) **P1** is represented by the angles respectively around the three axes defined by the first direction, the second direction, and the third direction, for each camera **1** (**2**). The first direction is a direction in which the optical centers **O1** and **O2** of the two cameras **1** and **2** selected from the plurality of cameras **1** and **2** are straightly connected to each other. The second direction is the direction along the optical axis for each camera **1** (**2**). The third direction is perpendicular to the first direction and the second direction. The arithmetic processing unit **10** includes the first converter **101,** the second converter **102,** and the disparity estimation unit **103**. The first converter **101** is configured to convert the captured image into the first conversion image in which the position in the vertical direction is represented by the angle **ß** around the axis in the first direction and the position in the horizontal direction is represented by the angle $\varphi$ around the axis in the second direction. The second converter **102** is configured to convert the captured image into the second conversion image in which the position in the vertical direction is represented by the angle **ß** around the axis in the first direction and the position in the horizontal direction is represented by the angle $\alpha$ around the axis in the third direction. The disparity estimation unit **103** is configured to calculate the disparity regarding the part (desired point) **P1** by associating the parts (desired points) in the fields of view of the two cameras **1** and **2** by use of the first conversion images and the second conversion images.

In other words, the stereo camera device of the present embodiment includes the stereo camera unit **13;** and the arithmetic processing unit **10**. The stereo camera unit **13** includes the pair of cameras **1** and **2** for capturing images of a predetermined space, and is configured to provide the captured images respectively by the pair of cameras **1** and **2** to the arithmetic processing unit **10**. The arithmetic processing unit **10** includes the first converter **101,** the second converter **102,** and the disparity estimation unit **103**. The first converter **101** is configured to convert the captured image by the camera **1** (2) into the first conversion image for each of the pair of cameras **1** and **2**. The first conversion image is defined as an image in which a position of a pixel is represented by two-dimensional orthogonal coordinates defined by the first angle **ß** around the first axis and the second angle $\varphi$ around the second axis. The second converter **102** is configured to convert the captured image by the camera **1** (**2**) into the second conversion image for each of the pair of cameras **1** and **2**. The second conversion image is defined as an image in which a position of a pixel is represented by two-dimensional orthogonal coordinates defined by the first angle **B** and the third angle $\alpha$ around the third axis. The first axis is defined by a straight line connecting optical centers **O1** and **02** of the pair of cameras **1** and **2** to each other. The second axis is defined by the optical axis of the camera **1** (**2**). The third axis is defined by an axis respectively orthogonal to the first axis and the second axis. The disparity estimation unit 103 is configured to calculate the disparity regarding the desired point **P1** in the space based on the first conversion images obtained by the first converter **101** and the second conversion images obtained by the second converter **102.**

The stereo camera device of the present embodiment mentioned above uses the conversion images (the first conversion image and the second conversion image) obtained by performing coordinate conversion on the images captured by the cameras **1** and **2** such that a straight line parallel to the optical axis is not distorted. There are advantageous effects that associating the images captured by the two cameras **1** and **2** is facilitated.

Further in the stereo camera device of the present embodiment, the disparity estimation unit **103** calculates the disparity regarding the part **P1** by obtaining the corresponding points in the two first conversion images respectively created from the captured images taken by the two cameras **1** and **2,** and estimates the degree of coincidence between the corresponding points. Additionally, the disparity estimation unit 103 calculates the disparity regarding the part **P1** by obtaining the corresponding points in the two second conversion images respectively created from the captured images taken by the cameras **1** and **2,** and estimates the degree of coincidence between the corresponding points. The disparity estimation unit **103** selects, as the disparity regarding the part **P1**, a disparity that has the higher degree of coincidence from the disparities of the pixels related to the same part **P1** included in the disparities calculated for each of the pixels in the first conversion image and the second conversion image.

In other words, the disparity estimation unit **103** is configured to calculate the corresponding points regarding the desired point **P1** from the two first conversion images respectively corresponding to the pair of cameras **1** and **2,** and calculate the disparity (first disparity) regarding the desired point **P1** based on the corresponding points, and evaluate the degree of coincidence (first degree of coincidence) **Ds** between the corresponding points of the two first conversion images. The disparity estimation unit **103** is configured to calculate the corresponding points regarding the desired point **P1** from the two second conversion images respectively corresponding to the pair of cameras **1** and **2,** and calculate the disparity (second disparity) regarding the desired point **P1** based on the corresponding points, and evaluate the degree of coincidence (second degree of coincidence) **Ds** between the corresponding points of the two second conversion images. The disparity estimation unit **103** is configured to compare the first degree of coincidence **Ds** with the second degree of coincidence **Ds** with regard to the same desired point **P1,** and select the first disparity as the disparity regarding the desired point **P1** when the first degree of coincidence **Ds** is higher than the second degree of coincidence **Ds**, and select the second disparity as the disparity regarding the desired point when the first degree of coincidence **Ds** is lower than the second degree of coincidence **Ds.**

Note that, in the present embodiment, the block-matching technique is employed. However, the technique for calculating the pixel values of the first disparity image and the second disparity image is not limited to the block-matching technique but may be another technique available for stereo matching.

Optionally, the stereo camera device of the present embodiment further includes a distance measurement unit (not shown). The distance measurement unit is configured to calculate a distance to the desired point **P1** by use of the disparity calculated by the disparity estimation unit **103**. The distance measurement unit may be configured to calculate the distances to a plurality of desired points **P1** to create a distance image.

As described above, in the present embodiment, the position in the horizontal directions of the first conversion images are represented by the angles (second angles) $\varphi$ around the optical axes of the cameras **1** and **2**, respectively. According to the first conversion images, it is possible to associate straight lines parallel to the optical axes with each other without causing distortion. Hence, by using the first conversion images, it is possible to facilitate stereo matching regarding planes parallel to the optical axes. Additionally, the disparity is calculated from not only the first conversion images but also the second conversion images, and the accuracies of the disparities of the first conversion image and the second conversion image are evaluated by use of the degrees of coincidence. Consequently, it is possible to estimate the disparity with the accuracy higher than that of the prior art.

The program for operating the computer is used for a stereo camera device. The stereo camera device includes the plurality of cameras **1** and **2**. The plurality of cameras **1** and **2** are arranged such that optical axes thereof are parallel to each other and the fields of view thereof are overlapped with each other. To calculate the three-dimensional information of a part (desired part) **P1** in the field of view from the plurality of captured images respectively taken by the cameras **1** and **2,** the stereo camera device calculates the disparity regarding the part (desired point) **P1**. In the stereo camera device, the first coordinate system and the second coordinate system are used. The first coordinate system is a coordinate system defined such that a position of a pixel of the captured image is determined by the two-dimensional orthogonal coordinates defined in the light receiving surface, for each of the cameras 1 and 2. The second coordinate system is a coordinate system defined such that the viewing direction (i.e., the visual direction of the camera **1, 2**) from the original point (optical center) **O1** (**O2**) to the part (desired point) **P1** is represented by the angles respectively around the three axes defined by the first direction, the second direction, and the third direction, for each camera **1** (**2**). The first direction is a direction in which the optical centers **O1** and **O2** of the two cameras **1** and **2** selected from the plurality of cameras **1** and **2** are straightly connected to each other. The second direction is the direction along the optical axis for each camera **1** (**2**). The third direction is perpendicular to the first direction and the second direction. This program allows the computer to functions as the first converter **101,** the second converter **102,** and the disparity estimation unit **103**. The first converter **101** is configured to convert the captured image into the first conversion image in which the position in the vertical direction is represented by the angle **ß** around the axis in the first direction and the position in the horizontal direction is represented by the angle $\varphi$ around the axis in the second direction. The second converter **102** is configured to convert the captured image into the second conversion image in which the position in the vertical direction is represented by the angle **ß** around the axis in the first direction and the position in the horizontal direction is represented by the angle $\alpha$ around the axis in the third direction. The disparity estimation unit **103** is configured to calculate the disparity regarding the part (desired point) **P1** by associating the parts (desired points) in the fields of view of the two cameras **1** and **2** by use of the first conversion images and the second conversion images.

Besides, this program may be recorded on a computer-readable recording medium. This computer-readable recording medium is defined as a computer-readable recording medium storing a program used in a computer connected to a stereo camera unit. The stereo camera unit **13** includes the pair of cameras **1** and **2** for capturing images of the predetermined space, and is configured to provide the captured images respectively by the pair of cameras **1** and **2** to the arithmetic processing unit **10**. The pair of cameras **1** and **2** are arranged such that optical axes thereof are parallel to each other and fields of view thereof are overlapped with each other. The program is designed to have the computer functions the first converter **101,** the second converter **102,** and the disparity estimation unit **103**. The first converter **101** is configured to convert the captured image by the camera **1** (**2**) into the first conversion image for each of the pair of cameras **1** and **2**. The first conversion image is defined as an image in which a position of a pixel is represented by two-dimensional orthogonal coordinates defined by the first angle **ß** around the first axis and the second angle $\varphi$ around the second axis. The second converter **102** is configured to convert the captured image by the camera **1** (**2**) into the second conversion image for each of the pair of cameras **1** and **2**. The second conversion image is defined as an image in which a position of a pixel is represented by two-dimensional orthogonal coordinates defined by the first angle **ß** and the third angle $\alpha$ around the third axis. The first axis is defined by a straight line connecting optical centers **O1** and **O2** of the pair of cameras **1** and **2** to each other. The second axis is defined by the optical axis of the camera **1** (**2**). The third axis is defined by an axis respectively orthogonal to the first axis and the second axis. The disparity estimation unit **103** is configured to calculate the disparity regarding the desired point **P1** in the space based on the first conversion images obtained by the first converter **101** and the second conversion images obtained by the second converter **102.**

(SECOND EMBODIMENT)

In the first embodiment, the disparity estimation unit **103** searches for the corresponding points by use of the block-matching technique. Further, search for the corresponding points is performed on each of the first conversion image and the second conversion image. In the following explanation, when there is no need to distinguish the first conversion image and the second conversion image from each other, they are simply referred to as conversion images.

In the block-matching, as shown in **FIG. 8**, the window **W1** is set to one conversion image to be searched for the corresponding point and the scanning area **W2** is set to the other conversion image. Further, in the latter conversion image, the scanning area **W2** is moved along the lateral axis. The position of the scanning area **W2** at which the SAD value **Vs** defined by the aforementioned formula (9) is minimized is determined as the corresponding point.

In this block-matching, if the SAD value **Vs** hardly changes along with change in the position of the scanning area **W2** in the conversion image, the corresponding points cannot be obtained. This problem is likely to occur if change in the distribution of the luminance value is small in the lateral direction of the conversion image. For example, a strip area along the lateral direction is present in the conversion image, and the luminance in this area is not changed in the lateral direction. In this case, it is impossible to determine the corresponding points.

As described in the first embodiment, the distortion in the direction parallel to the optical axis of the camera is reduced at the opposite ends in the longitudinal direction of the first conversion image. The distortion in the plane perpendicular to the optical axis of the camera is reduced at the center of the second conversion image.

As the distortion is reduced, the search for the corresponding points is more facilitated and the reliability is more increased. Hence, for each pixel to be searched for the corresponding points, there may be two cases where the pixel of the first conversion image is suitable for the search for the corresponding points and the pixel of the second conversion image is suitable for the search for the corresponding points.

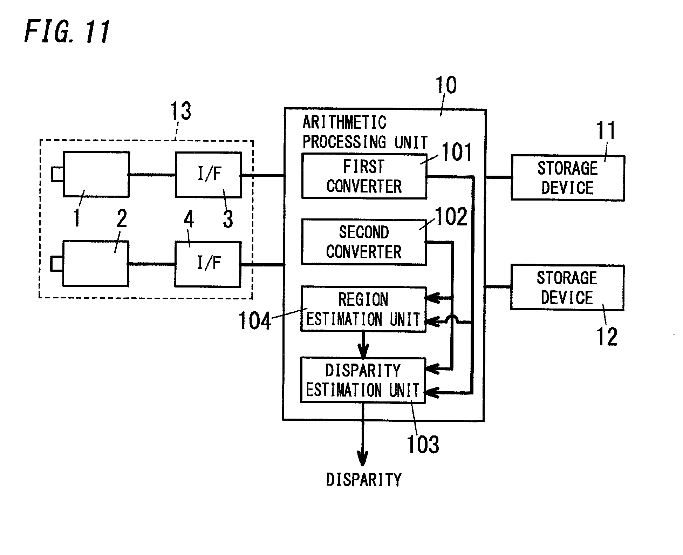

In the present embodiment, to evaluate which one of the first conversion image and the second conversion image is suitable for the search for the corresponding points before the disparity estimation unit **103** searches for the corresponding points, a region evaluation unit **104** is added as shown in **FIG. 11.** In other words, in the present embodiment, the arithmetic processing unit **10** further includes the region evaluation unit **104.**

The region evaluation unit **104** evaluates whether an intended region is a prescribed region in which change in the luminance value in the lateral direction is relatively large, for each of the first conversion image and the second conversion image.

In view of the evaluation result obtained by the region evaluation unit **104,** the disparity estimation unit **103** uses at least one of the first conversion image and the second conversion image to search for the corresponding points.

As the process prior to the process by the disparity estimation unit **103,** the evaluation is made by the region evaluation unit **104** to reduce the number of objects to be searched for the corresponding points. Hence, the number of unprofitable processes can be reduced. Consequently, a computational complexity can be reduced and the reliability of the stereo matching can be improved.

To evaluate change in the luminance value in the lateral direction for each of the conversion images (the first conversion image and the second conversion image) obtained from the same captured image, the region evaluation unit **104** uses an edge intensity **E1** defined by the following formula (13) as an evaluation value for the pixel ($\varphi$, **ß**) of the first conversion image. Additionally, the region evaluation unit **104** uses an edge intensity **E2** defined by the following formula (14) as an evaluation value for the pixel ($\alpha$, **ß**) of the second conversion image. The edge intensity **E1** is calculated from the first conversion image and the edge intensity E2 is calculated from the second conversion image.

[FORMULA 8]

$$E1 = \left| I1(\phi - 1, \beta) - I1(\phi + 1, \beta) \right| \qquad (13)$$

$$E2 = \left| I2(\alpha - 1, \beta) - I2(\alpha + 1, \beta) \right| \qquad (14)$$

Note that, **I1**($\varphi$, B) denotes the luminance value (pixel value) of the position ($\varphi$, **ß**) in the first conversion image, and **I2** denotes the luminance value (pixel value) of the position ($\alpha$, **ß**) in the second conversion image. In other words, the region evaluation unit **104** calculates the first evaluation value (edge intensity) **E1** regarding the change in the luminance value for the pixel (first pixel) ($\varphi$, **ß**) of the first conversion image, and the second evaluation value (edge intensity) **E2** regarding the change in the luminance value for the pixel (second pixel) ($\alpha$, **ß**) of the second conversion image.

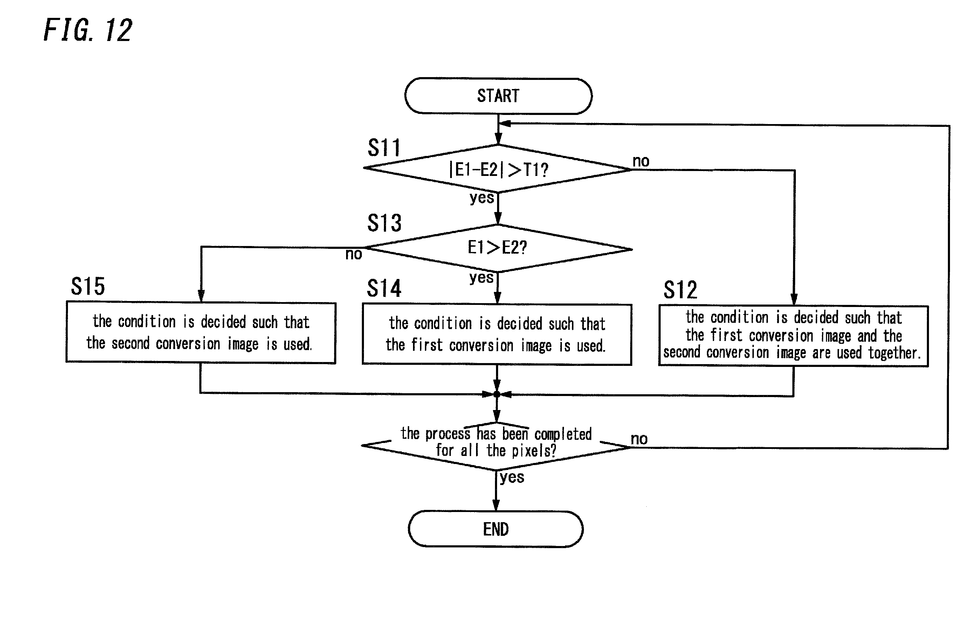

As shown in **FIG. 12,** the region evaluation unit **104** performs the following evaluation on all the pixels of each of the first conversion image and the second conversion image, thereby determining, for each pixel, which one of the first conversion image and the second conversion image is used by the disparity estimation unit **103** to search for the corresponding points.

In the operation shown in **FIG. 12,** the region evaluation unit **104** calculates the edge intensity **E1** with regard to the pixel ($\varphi$, **ß**) of the first conversion image and also calculates the edge intensity **E2** with regard to the pixel ($\alpha$, **ß**) of the second conversion image corresponding to the above pixel ($\varphi$, **ß**). Note that, the pixel of the second conversion image corresponding to the pixel ($\varphi$, **ß**) of the first conversion image means the pixel of the second conversion image that is derived from the same pixel of the captured image from which the pixel of the first conversion image is derived. For example, if the pixel ($\varphi$**1, ß1**) of the first conversion image and the pixel ($\alpha$**2, ß2**) of the second conversion image are derived from the same pixel (**u0, v0**) of the captured image, the pixel ($\varphi$**1, ß1**) of the first conversion image and the pixel ($\alpha$**2, ß2**) of the second conversion image are pixels corresponding to each other. In other words, the edge intensity **E1** is calculated from the luminance values of pixels on both sides of the selected pixel in the lateral direction with regard to the first conversion image, and the edge intensity **E2** is calculated from the luminance values of pixels on both sides of the selected pixel in the lateral direction with regard to the second conversion image.

Next, an absolute value of a difference between the edge intensity **E1** calculated from the first conversion image and the edge intensity **E2** calculated from the second conversion image is compared with a predetermined threshold **T1** (**S11**). In other words, the region evaluation unit **104** calculates the difference $|E1-E2|$ between the first evaluation value **E1** and the second evaluation value **E2** and compares the difference $|E1-E2|$ with the threshold **T1.**

When the absolute value of the difference between the edge intensities **E1** and **E2** is not greater than the threshold **T1,** the reliability of the disparity calculated from the first conversion image and the reliability of the disparity calculated from the second conversion image are probably in a similar range.

For this reason, when the absolute value of the difference between the edge intensities **E1** and **E2** is not greater than the threshold **T1** (**S11**: no), to search for the corresponding points regarding the desired pixel, it is scheduled to use both the first conversion images and the second conversion images (**S12**). In other words, the region evaluation unit **104** selects a third condition for the first pixel ($\varphi$, **ß**) and the second pixel ($\alpha$, **ß**) when the difference $|E1-E2|$ is equal to the threshold **T1** or less. When the third condition is selected for the first pixel ($\varphi$, **ß**) and the second pixel ($\alpha$, **B**), the region evaluation unit **104** calculates the corresponding points by use of the first conversion images and the second conversion images with regard to the first pixel ($\varphi$, **ß**) and the second pixel ($\alpha$, **ß**).

In contrast, when the absolute value of the difference between the edge intensities **E1** and **E2** is greater than the threshold **T1** (**S11**: yes), the edge intensities **E1** and **E2** are compared with each other (**S13**). In other words, when the difference $|E1-E2|$ exceeds the threshold **T1,** the region evaluation unit **104** compares the change in the luminance value of the first pixel ($\varphi$, **ß**) (in the present embodiment, the edge intensity **E1**) and the change in the luminance value of the second pixel ($\alpha$, **ß**) (in the present embodiment, the edge intensity **E2**).

Probably, as the edge intensity **E1, E2** is greater, the search for the corresponding points is facilitated more. Hence, when the edge intensity **E1** is greater than the edge intensity **E2** (**S13: yes**), to search for the corresponding points regarding the desired pixel, a condition is determined such that the first conversion images are searched for the corresponding points (**S14**). In other words, when the change in the luminance value of the first pixel ($\varphi$, **ß**) (the edge intensity **E1**) exceeds the change in the luminance value of the second pixel ($\alpha$, **ß**) (the edge intensity **E2**), the region evaluation unit **104** selects a first condition for the first pixel ($\varphi$, **B**) and the second pixel ($\alpha$, **ß**). When the first condition is selected for the first pixel ($\varphi$, **ß**) and the second pixel ($\alpha$, **ß**), the region evaluation unit **104** calculates the corresponding points by use of the first conversion images with regard to the first pixel ($\varphi$, **ß**) and the second pixel ($\alpha$, **B**).

In contrast, when the edge intensity **E1** is less than the edge intensity **E2** (**S13**: no), to search for the corresponding points regarding the desired pixel, a condition is determined such that the second conversion images are searched for the corresponding points (**S15**). In other words, when the change in the luminance value of the first pixel ($\varphi$, **ß**) (the edge intensity **E1**) falls below the change in the luminance value of the second pixel ($\alpha$, **ß**) (the edge intensity **E2**), the region evaluation unit **104** selects a second condition for the first pixel ($\varphi$, **ß**) and the second pixel ($\alpha$, **ß**). When the second condition is selected for the first pixel ($\varphi$, **ß**) and the second pixel ($\alpha$, **ß**), the region evaluation unit **104** calculates the corresponding points by use of the second conversion images with regard to the first pixel ($\varphi$, **ß**) and the second pixel ($\alpha$, **ß**).

The aforementioned process is performed on all the pixels in the first conversion image (**S16**). Further, the evaluation result from the region evaluation unit **104** is provided to the disparity estimation unit **103** by way of the storage device **12** connected to the arithmetic processing unit **10.**

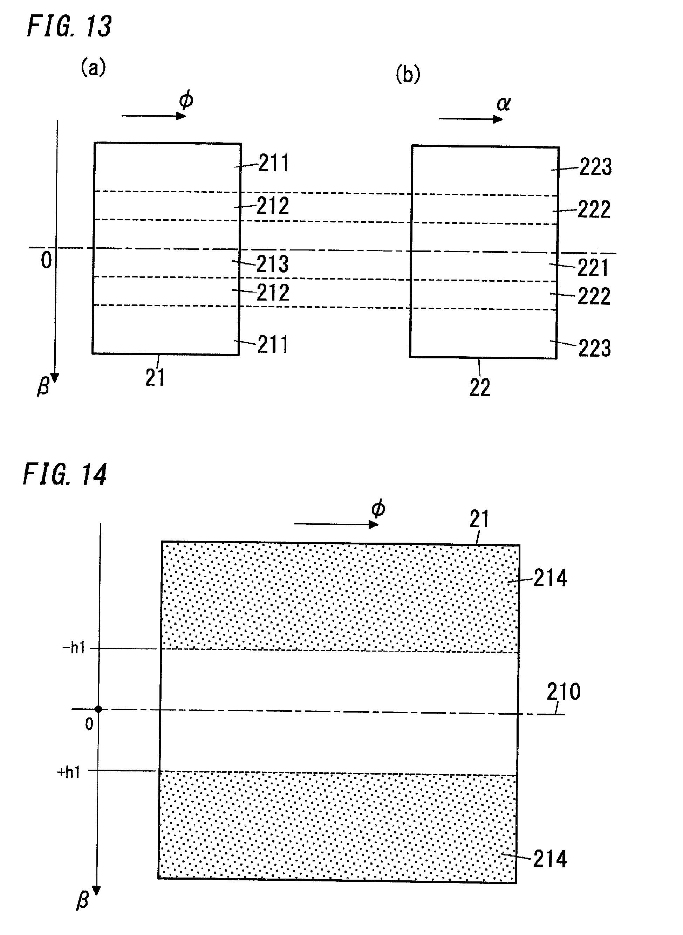

When classification of regions to be searched for the corresponding points is performed with the process shown in **FIG. 12,** the first conversion image **21** is divided into regions **211,** regions **212,** and a region **213,** as shown in **FIG. 13 (a).** In the region **211,** only the first conversion images **21** are used. In the region **212,** both the first conversion images **21** and the second conversion images **22** are used. The region **213** is not used to search for the corresponding points. Similarly, the second conversion image **22** is divided into a region **221,** regions **222,** and regions **223,** as shown in **FIG. 13 (b).** In the region **221,** only the second conversion images **22** are used. In the region **222,** both the first conversion images **21** and the second conversion images **22** are used. The region **223** is not used to search for the corresponding points.

The stereo camera device of the present embodiment described above includes the region evaluation unit **104.** The region evaluation unit **104** calculates the evaluation values regarding a change in the surrounding luminance values with regard to the first conversion images and the second conversion images for each intended pixel. The region evaluation unit **104** is configured to, when the difference between the evaluation values exceeds the threshold **T1,** determine a condition such that the conversion images that have the greater change in the luminance value are selected among the first conversion images and the second conversion images and used for extracting the corresponding points to the intended pixel. The region evaluation unit **104** is configured to, when the difference between the evaluation values falls below the threshold **T1,** determine a condition such that both the first conversion images and the second conversion images are used for extracting the corresponding points to the intended pixel. The disparity estimation unit 103 is configured to obtain the corresponding points for each pixel in conformity with the condition determined by the region evaluation unit **104.**

In other words, in the stereo camera device of the present embodiment, the arithmetic processing unit **10** further includes the region evaluation unit **104**. The region evaluation unit **104** is configured to calculate the first evaluation value (edge intensity) **E1** regarding a change in the luminance value with regard to the first pixel (φ, **ß**) of the first conversion image and the second evaluation value (edge intensity) **E2** regarding a change in the luminance value with regard to the second pixel (α, B) of the second conversion image corresponding to the first pixel (φ, **B**). The region evaluation unit **104** is configured to calculate the difference |E1-E2| between the first evaluation value **E1** and the second evaluation value **E2** and compare the difference |E1-E2| with the predetermined threshold **T1**. The region evaluation unit **104** is configured to compare the change in the luminance value of the first pixel (φ, **ß**) (the edge intensity **E1** in the present embodiment) and the change in the luminance value of the second pixel (α, **ß**) (the edge intensity **E2** in the present embodiment) when the difference |E1-E2| exceeds the threshold **T1**. The region evaluation unit **104** is configured to select a first condition for the first pixel (φ, **ß**) and the second pixel (α, **ß**) when the change in the luminance value of the first pixel (φ, **B**) (the edge intensity **E1**) exceeds the change in the luminance value of the second pixel (α, **ß**) (the edge intensity **E2**). The region evaluation unit **104** is configured to select a second condition for the first pixel (φ, **ß**) and the second pixel (α, **ß**) when the change in the luminance value of the first pixel (φ, **ß**) (the edge intensity **E1**) falls below the change in the luminance value of the second pixel (α, **ß**) (the edge intensity **E2**). The region evaluation unit **104** is configured to select a third condition for the first pixel (φ, **ß**) and the second pixel (α, **ß**) when the difference |E1-E2| is equal to the threshold **T1** or less. The region evaluation unit **104** is configured to, when the first condition is selected for the first pixel (φ, **B**) and the second pixel (α, **B**), calculate the corresponding points by use of the first conversion images with regard to the first pixel (φ, **ß**) and the second pixel (α, **ß**). The region evaluation unit **104** is configured to, when the second condition is selected for the first pixel (φ, **B**) and the second pixel (α, **B**), calculate the corresponding points by use of the second conversion images with regard to the first pixel (φ, **B**) and the second pixel (α, **ß**). The region evaluation unit **104** is configured to, when the third condition is selected for the first pixel (φ, **ß**) and the second pixel (α, **ß**), calculate the corresponding points by use of the first conversion images and the second conversion images with regard to the first pixel (φ, **ß**) and the second pixel (α, **ß**).

In the present embodiment, before the disparity estimation unit **103** performs the process of searching for the corresponding points and calculating the disparity, the region evaluation unit **104** decides the condition determining which one of the pair of first conversion images and the pair of second conversion images is used for calculating the corresponding points. Hence, in the first conversion images and the second conversion images, the region used for calculation of the disparity is narrowed. In summary, in contrast to a case where the corresponding points are calculated for all the regions of each of the first conversion images and the second conversion images, a computational complexity is reduced. Further, since pixels used for search for the corresponding points are selected from the first conversion images and the second conversion images to improve as possible the reliability of the disparity calculated for each pixel, the reliability of the calculated disparity is improved.

In the aforementioned operation, the edge intensities **E1** and **E2** are calculated from the pixels adjacent to the intended pixel in the lateral direction. However, an alternative technique (e.g., the Sobel operator) used in the image processing techniques for calculating an edge intensity or a gradient direction of a luminance value may be available. The other configurations and operations are the same as those of the first embodiment.

(THIRD EMBODIMENT)

Since in the first embodiment, the first converter **101** and the second converter **102** perform the conversion of the captured images with regard to all the pixels in each of the images captured by the cameras **1** and **2,** the computational complexity is relatively large. In the present embodiment, an explanation is made to a technique of reducing the computational complexity by preliminarily limiting regions of the captured images to be converted by the first converter **101** and the second converter **102**.

Each of the first converter **101** and the second converter **102** has a function of converting the coordinates and a function of associating the luminance value with the coordinate obtained by the conversion. Since the conversion of the coordinates is performed by use of the above formulae (1) to (8), some of the conversion can be easily performed by use of look-up tables. However, the process of associating the luminance value with the coordinates obtained by the conversion requires reverse conversion, thereby causing an increase in the computational complexity.

In view of this, as shown in **FIG. 14,** the first converter **101** performs the process of associating the luminance value with regard to a region **214** which satisfies a condition (first decision condition) that the angle **ß** from a center line **210** at **ß** = 0 in the first conversion image **21** is not less than a prescribed threshold **h1** (e.g., **h1** = 30 degrees). In summary, the first converter **101** performs the process of determining the pixel value (luminance value) with regard to only the region **214** in the first conversion image **21** which satisfies the relation of |**ß**| ≥ **h1**.

In other words, the first converter **101** is configured to decide a first extraction region (region **214**) used for extracting the corresponding point from the first conversion image in accordance with the predetermined first decision condition, and calculate a pixel value regarding a pixel included in the first extraction region (region **214**), and not calculate a pixel value regarding a pixel not included in the first extraction region (region **214**).

To associate the luminance values with the respective pixels in the first conversion images, the process of calculating the position (u, v) in the images captured by the cameras **1** and **2** from the position (φ, **ß**) of the pixel in the first conversion image is necessary. Further, it is necessary to determine the luminance value with the interpolation using the luminance values of pixels surrounding the calculated position (**u, v**). Consequently, the process of associating the luminance value with the pixel in the first conversion image requires the more computational complexity than the process of converting the position (**u, v**) in the captured image taken into the position (φ, **B**) of the pixel in the first conversion image does. In contrast, in the present embodiment, the region associated with the luminance values is narrowed. Hence, the computational complexity can be reduced.

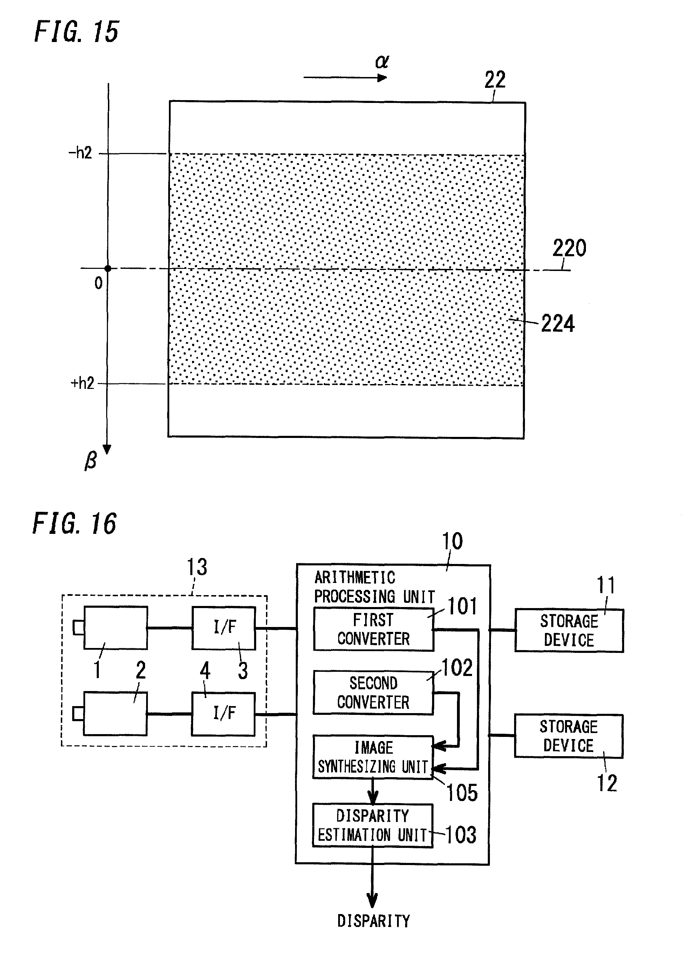

Similarly, as shown in **FIG. 15,** the second converter **102** performs the process of associating the luminance value with regard to a region **224** which satisfies a condition (second decision condition) that an angle **ß** from a center line **220** at **ß** = 0 in the second conversion image **22** is not greater than a prescribed threshold **h2** (e.g., **h2** = 60 degrees). In summary, the second converter **102** performs the process of determining the pixel value (luminance value) with regard to only the region **224** in the second conversion image **22** which satisfies the relation of |**ß**| ≤ **h2**.

In other words, the second converter **102** is configured to decide a second extraction region (region **224**) used for extracting the corresponding point from the second conversion image in accordance with the predetermined second decision condition, and calculate a pixel value regarding a pixel included in the second extraction region (region **224**), and not calculate a pixel value regarding a pixel not included in the second extraction region (region **224**).

Thus, also with regard to the second conversion image **22,** the region associated with the luminance values is narrowed. Hence, the computational complexity can be reduced.

The present embodiment is the same as the first embodiment except that each of the first conversion image **21** and the second conversion image **22** relates to a partial area. After the first conversion image **21** and the second conversion image **22** are obtained, the process of obtaining the first disparity image and the first coincidence image as well as the second disparity image and the second coincidence image, and of determining the disparity is performed.

As described above, in the stereo camera device of the preset embodiment, with regard to a first region in which the corresponding points are determined by use of either the first conversion image or the second conversion image and a second region in which the corresponding points are determined by use of both the first conversion image and the second conversion image, the first converter **101** and the second converter **102** have functions of determining at least the first region in conformity with a predetermined condition with respect to the first conversion image and the second conversion image.

In other words, in the stereo camera device of the present embodiment, the first converter **101** is configured to decide a first extraction region (region **214**) used for extracting the corresponding point from the first conversion image in accordance with the predetermined first decision condition, and calculate a pixel value regarding a pixel included in the first extraction region (region **214**), and not calculate a pixel value regarding a pixel not included in the first extraction region (region **214**). The second converter **102** is configured to decide a second extraction region (region **224**) used for extracting the corresponding point from the second conversion image in accordance with the predetermined second decision condition, and calculate a pixel value regarding a pixel included in the second extraction region (region **224**), and not calculate a pixel value regarding a pixel not included in the second extraction region (region **224**).

The thresholds **h1** and **h2** described in the present embodiment are only examples, and these thresholds **h1** and **h2** may be appropriately set. Particularly, when there is no need to calculate the disparity for the entire captured image, a region to be associated with the luminance value may be more narrowed with regard to each of the first conversion image and the second conversion image. Further, the thresholds **h1** and **h2** may be set such that the region to be associated with the luminance value in the first conversion image and the region to be associated with the luminance value in the second conversion image are not overlapped with each other. The other configurations and operations are the same as those of the first embodiment.

Note that, the configuration of the present embodiment is based on the following knowledge. As for the first conversion image **21,** within the region **214** in which the angle **ß** is large, a surface parallel to the optical axis is reflected without being distorted. Hence, the stereo matching can be facilitated. In other words, with regard to the region **214,** a probability that the pixel value (disparity) of the second disparity image calculated from the second conversion image **22** is selected is relatively low and a probability that the pixel value (disparity) of the first disparity image calculated from the first conversion image **21** is selected is relatively high. Therefore, with regard to the region **214** in which the angle **ß** is large, using the first conversion image **21** is preferable to using the second conversion image. By not using the second conversion image **22** in the region **214,** it is possible to reduce the computational complexity.

In contrast, as for the second conversion image **22,** within a region in which the angle **ß** is small, a surface crossing the optical axis is reflected without being distorted, and distortion of a surface parallel to the optical axis is also decreased. Hence, with regard to the region in which the angle **ß** is small, the probability that the pixel value (disparity) of the second disparity image calculated from the second conversion image **22** is selected is higher than the probability that the pixel value (disparity) of the first disparity image calculated from the first conversion image **21** is selected.

Therefore, with regard to the region other than the region **214,** it is possible to reduce the computational complexity by not using the first conversion image **21.**

(FOURTH EMBODIMENT)

Like the third embodiment, the present embodiment employs the technique of associating the luminance values with a partial region in each of the first conversion image and the second conversion image, in order to reduce the computational complexity. In the third embodiment, the threshold **h1** used for the first conversion image and the threshold **h2** used for the second conversion image are different from each other. In contrast, in the present embodiment, the same threshold **h3** is used for the first conversion image and the second conversion image.

In summary, in the present embodiment, with regard to the first conversion image, the luminance values are associated with a region which satisfies a condition that the angle **ß** is not less than the threshold **h3**. With regard to the second conversion image, the luminance values are associated with a region which satisfies a condition that the angle **ß** is not greater than the threshold **h3.**

Hence, in a process of calculating the disparity, there is no overlap region between the first conversion image and the second conversion image, and therefore it is possible to reduce the computational complexity in such an extent. The threshold **h3** is not limited to particular one. However, to prevent a decrease in the reliability of the coincidence evaluation by the stereo matching, it is preferable that the threshold **h3** is 45 degrees, for example.

As described above, the operations of the first converter **101** and the second converter **102** of the present embodiment are same as those of the second embodiment except the different threshold **h3** is used. However, the first conversion image created by the first converter **101** and the second conversion image created by the second converter **102** have no region corresponding to the same angle **ß**. Hence, in the present embodiment, as shown in **FIG. 16,** an image synthesizing unit **105** configured to synthesize an image from the first conversion image created by the first converter **101** and the second conversion image created by the second converter **102**. In other words, in the present embodiment, the arithmetic processing unit **10** further includes the image synthesizing unit **105.**

Consequently, the four different images which are the first conversion images and the second conversion images created from the captured images taken by the respective two cameras **1** and **2** are not given to the disparity estimation unit **103**. Instead, the two different images synthesized by the image synthesizing unit **105** are given to the disparity estimation unit **103**. Hence, the disparity estimation unit **103** creates a single disparity image rather than the two different disparity images which are the first disparity image and the second disparity image. Additionally, the disparity estimation unit **103** creates a single coincidence image rather than the two different coincidence images which are the first coincidence image and the second coincidence image. In other words, the disparity estimation unit **103** performs the associating process one time by use of the two different synthesized images (conversion image) to calculate the disparity.

When an image is synthesized from the first conversion image and the second conversion image, the image may include a discontinuous area at a border between the first conversion image and the second conversion image. When the synthesized image has such a discontinuous area, the reliability of the coincidence evaluation by the stereo matching is likely to be decreased. In other words, when the synthesized image has such a discontinuous area at a border, an object with a different distance is included in the window **W1** and the scanning area **W2** which include the border, in the stereo matching using the block-matching technique. This causes a decrease in the reliability of the coincidence evaluation.

This adverse effect can be reduced by decreasing the number of pixels of each of the window **W1** and the scanning area **W2**. However, a decrease in the number of pixels of each of the window **W1** and the scanning area **W2** is likely to cause a decrease in a change in the SAD value. Hence, the accuracy of detecting the corresponding points is decreased.

In contrast, it depends on the threshold **h3** whether the border in the synthesized image from the conversion images becomes discontinuous or not. According to FORMULA 4, when **ß** is equal to 45 degrees, **Y** is equal to **Z** and therefore $\alpha$ is equal to $\varphi$**.** Hence, when the threshold **h3** is 45 degrees, the synthesized image is continuous at the border between the conversion images. In view of this, it is preferable that the threshold **h3** is 45 degrees, as mentioned above. Note that, even when the threshold **h3** is not 45 degrees, the reliability of the disparity at only a region close to the border is likely to be decreased but the reliability of the disparity at other regions is not likely to be decreased.

As described above, in the stereo camera device of the preset embodiment, with regard to a first region in which the corresponding points are determined by use of either the first conversion image or the second conversion image and a second region in which the corresponding points are determined by use of both the first conversion image and the second conversion image, the first converter **101** and the second converter **102** have functions of determining at least the first region in conformity with a predetermined condition with respect to the first conversion image and the second conversion image.

In other words, in the stereo camera device of the present embodiment, the first converter **101** is configured to decide a first extraction region (region **214**) used for extracting the corresponding point from the first conversion image in accordance with the predetermined first decision condition, and calculate a pixel value regarding a pixel included in the first extraction region (region **214**), and not calculate a pixel value regarding a pixel not included in the first extraction region (region **214**). The second converter **102** is configured to decide a second extraction region (region **224**) used for extracting the corresponding point from the second conversion image in accordance with the predetermined second decision condition, and calculate a pixel value regarding a pixel included in the second extraction region (region **224**), and not calculate a pixel value regarding a pixel not included in the second extraction region (region **224**).

Particularly, in the stereo camera device of the present embodiment, the first decision condition and the second decision condition are the same.

The other configurations and operations are the same as those of the first embodiment and the second embodiment. Since the first conversion image and the second conversion image do not overlap with each other, the computation complexity by the disparity estimation unit **103** is more decreased in the present embodiment than in the second embodiment. Consequently, it is possible to obtain the three-dimensional information of the real space with the computational complexity less than that of the second embodiment. Further, at the border, the first conversion image and the second conversion image have the same pixel value. Hence, even when the stereo matching using the block-matching technique is conducted with regard to the region including the border, the reliability of the degree of coincidence can be improved. In other words, since the reliability of the degree of coincidence is improved, the reliability of the stereo matching is also improved.

(FIFTH EMBODIMENT)

As described in the first embodiment, there are characteristics which show that distortion in the direction parallel to the optical axis is reduced at the opposite ends in the longitudinal direction of the first conversion image and distortion in the plane perpendicular to the optical axis is reduced at the center of the second conversion image. For this reason, by appropriately selecting regions from the first conversion images and the second conversion images in a similar manner as the third and fourth embodiments, it is possible to obtain the corresponding points by use of regions in which distortion is reduced at the opposite ends in the longitudinal direction and the center. However, in each of the first conversion image and the second conversion image, distortion at the opposite ends in the lateral direction is relatively large. Hence, the reliability of the disparity in such a region is lower than that in the other region, even when either the first conversion image or the second conversion image is used.

In view of this problem, in the present embodiment, to improve the reliability of the disparity calculated, the number of cameras is increased. For example, cameras are installed on the center of the ceiling in the room. In this case, according to the first conversion image, distortion is reduced at the opposite ends in the longitudinal direction (B direction) with regard to images of objects (e.g., wall surfaces and pillars) extending along the vertical direction. Further, according to the second conversion image, distortion is reduced at the center with regard to images of objects (e.g., floor surfaces and upper surfaces of desks) extending along the horizontal direction. Hence, for example, two pairs of cameras for determining the three-dimensional information with the stereo vision are installed and are arranged such that the longitudinal axes (ß directions) of the first conversion images of the two pairs are perpendicular to each other. Consequently, it is possible to obtain an image in which distortion is reduced with regard to all of wall surfaces and pillars in the room.

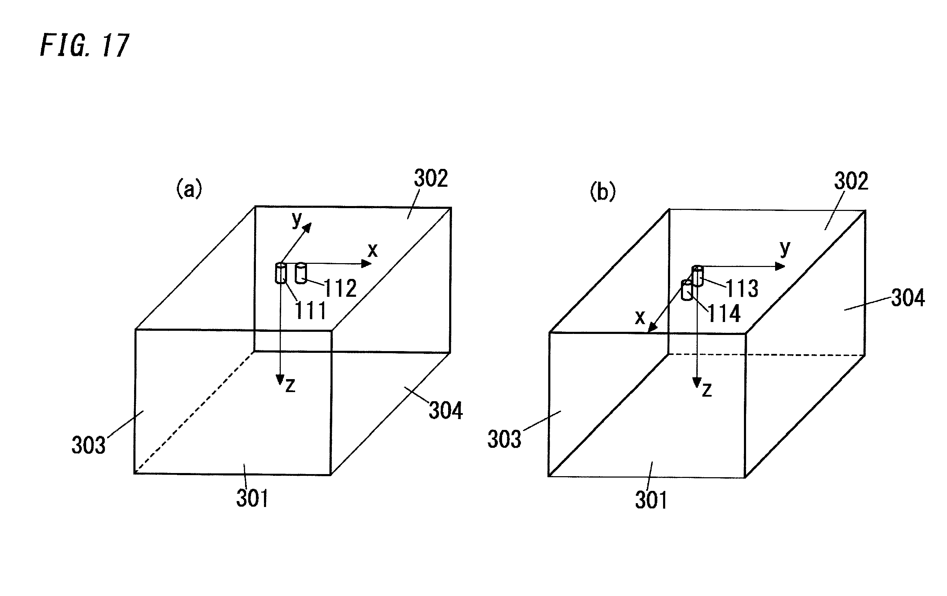

The aforementioned knowledge teaches that by providing two pairs of two cameras and using total four cameras, an image in which distortion is reduced can be obtained for all the regions in the room. For example, as shown in **FIG. 17 (a),** when two cameras **111** and **112** for the stereo vision are arranged in the left and right direction of the figure on the center of the ceiling, distortion is reduced with regard to regions corresponding to wall surfaces **301** and **302** extending along the left and right direction in the first conversion image. In contrast, as shown in **FIG. 17 (b),** when cameras **113** and **114** for the stereo vision are placed at positions that are rotated around an axis normal to the ceiling surface by 90 degrees from the positions illustrated in **FIG. 17 (a),** distortion is reduced with regard to regions corresponding to wall surfaces **303** and **304** perpendicular to the wall surfaces **301** and **302** in the first conversion image.

In the present embodiment, one of the four cameras **111, 112, 113,** and **114** is shared by both the pairs. The following explanation is made to instance that achieves, by using only three cameras in the aforementioned manner, the same function as the case where four cameras are used. With reference to the instance shown in **FIG. 17,** in the following explanation, one camera is used as the cameras **111** and **113**. In summary, the three cameras **111, 112,** and **114** are used. The three cameras **111, 112, 114** are arranged such that the optical centers thereof are in positions of vertexes of an isosceles right triangle, respectively. In brief, the shared camera **111** is placed equidistant from the remaining cameras **112** and **114**. Note that, it is not always necessary that the optical centers are in positions of vertexes of an isosceles right triangle, respectively. For example, it is allowed that the three cameras **111, 112, 114** are arranged such that the optical centers thereof are in positions of vertexes of an equilateral triangle.

The following explanation is made to an example where the cameras **111, 112,** and **114** are placed at positions of vertexes of an isosceles right triangle respectively. To measure the three-dimensional information with the stereo vision, two different pairs of two cameras respectively selected from the three cameras **111, 112,** and **114** are used together. In brief, the measurement of the three-dimensional information with the stereo vision is performed by use of a pair of the two cameras **111** and **112** and a pair of the two cameras **111** and **114.** The measurement of the three-dimensional information of each pair is performed in a similar manner as the first embodiment.

When four cameras are used, two cameras of each pair can be arranged in the horizontal direction (x-direction) of their captured images. However, in a case where three cameras are used, when one pair of two cameras (e.g., the cameras **111** and **112**) are arranged in the horizontal direction (x-direction) of their captured images, it is impossible to arrange the other pair of two cameras (e.g., the cameras **111** and **114**) in the horizontal direction of their captured images. In this case, the camera **114** is placed to have its horizontal direction parallel or perpendicular to the direction of the base line of the cameras **111** and **112.**

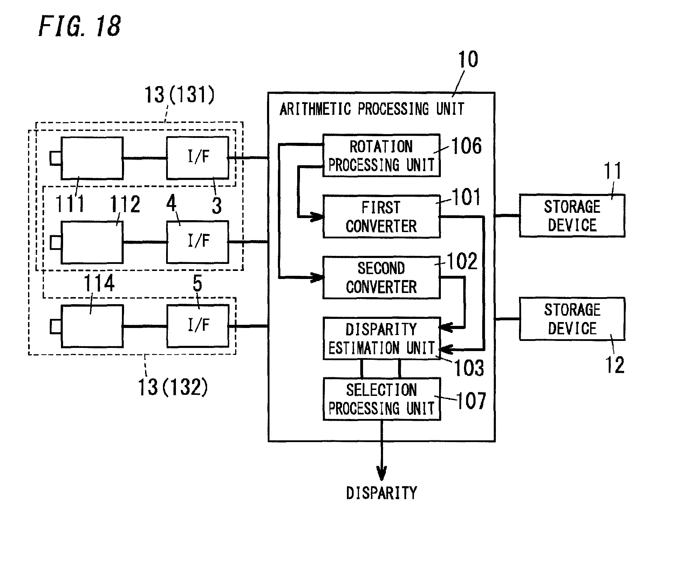

Hence, to create the first conversion image and the second conversion image with the same formulae as the first embodiment, a rotation processing unit **106** for rotating the captured images by 90 degrees is necessary as shown in **FIG. 18.** The rotation processing unit **106** is provided such that the process performed by the rotation processing unit **106** is prior to the processes performed by the first converter **101** and the second converter **102.** When the direction of the base line is not identical to the horizontal direction of the image before conversion, it is possible to have the direction of the base line identical to the horizontal direction of the image before conversion, by appropriately rotating the captured image with the rotation processing unit **106.** In this regard, the three captured images respectively taken by the three cameras **111, 112,** and **114** are stored in the storage device **12.** The rotation processing unit **106** needs only a function of changing a direction of reading-out pixels, as necessary.

As described above, by providing the rotation processing unit **106,** it is possible to create the first conversion image and the second conversion image with the same formulae (conversion equations) as the first embodiment. Note that, as an alternative to rotation of the captured image by the rotation processing unit **106,** conversion that is equivalent to the above rotation may be performed with mathematical formulae for converting the captured image into the first conversion image and the second conversion image respectively.

According to the configuration described above, the two pairs of first conversion images and the two pairs of second conversion images are created. The processing for each set is the same as the first embodiment, and the disparities are calculated by use of the pair of first conversion images and the pair of second conversion images. Since the disparity is calculated for each pair, one of the disparities having the reliability higher than that for the other is selected by a selection processing unit **107.** The reliability of the disparity can be evaluated with evaluation of the degree of coincidence **Ds** in a similar manner as the first embodiment. Note that, in this process, the selection processing unit **107** evaluates the degree of coincidence **Ds.** Hence, the first coincidence image and the second coincidence image are also given to the selection processing unit **107.**

As shown in **FIG. 18,** the stereo camera device of the present embodiment includes a plurality of (two, in **FIG. 18**) stereo camera units **13** (**131** and **132**). The plurality of stereo camera units **131** and **132** are arranged such that the first axes thereof cross each other and the second axes thereof are parallel to each other. The disparity estimation unit **103** is configured to calculate the disparity regarding the desired point for each of the plurality of stereo camera units **131** and **132.** The arithmetic processing unit **10** includes the selection processing unit **107.** The selection processing unit **107** is configured to calculate a degree of reliability (degree of coincidence **Ds,** in the present embodiment) for each disparity calculated by the disparity estimation unit **103,** and select the disparity having the highest degree of reliability from the disparities estimated by the disparity estimation unit **103.**

Additionally, in the stereo camera device of the present embodiment, one (the camera **111** in the present embodiment) of the two cameras of one (the stereo camera unit **131**) of the plurality of stereo camera units **13** is used as one camera of another stereo camera unit (stereo camera unit **132**).

In other words, the stereo camera device of the present embodiment can be considered as a stereo camera system. This stereo camera system includes the two stereo camera devices. Each stereo camera device includes a pair of two cameras, and the two pairs of cameras are arranged such that the first directions of the two pairs cross each other and that the optical axes of cameras are parallel to each other. The stereo camera system includes the selection processing unit **107** configured to select a disparity having higher reliability from the disparities estimated by the disparity estimation units **103** provided to the respective stereo camera devices.

Especially, in the instance shown in **FIG. 18,** the arithmetic processing unit **10** of one of the two stereo camera devices is used as the arithmetic processing unit **10** of the other stereo camera device. In summary, the plurality of stereo camera devices share the arithmetic processing unit **10.**

Further, in the instance shown in **FIG. 18,** the selection processing unit **107** is included in the arithmetic processing unit **10.** However, it is not always necessary that the selection processing unit **107** is included in the arithmetic processing unit **10.**

Furthermore, in the stereo camera system of the present embodiment, one of two cameras provided for each stereo camera device is used as a shared camera.

The other configurations and operations are same as those of the first embodiment and explanation thereof are deemed unnecessary. Further, the present embodiment can be used in combination with the configurations and operations of the second to fourth embodiments. As described above, in the second conversion image, distortion is reduced at the center with regard to objects such as floor surfaces and upper surfaces of desks extending along the horizontal direction. In the first conversion image, distortion is reduced at the opposite ends in the longitudinal direction with regard to objects such as wall surfaces and pillars extending along the vertical direction. Hence, when the region is selected in a similar manner as the third or fourth embodiment, by selecting regions at the longitudinal opposite ends of the first conversion image for each pair, the search for the corresponding points in the entire room can be facilitated. Further, when the region is evaluated about whether the search for the corresponding points is facilitated, it is sufficient that the first conversion image and the second conversion image are evaluated for each pair, and further similar evaluation is performed on the different pairs. In a case where the evaluation is performed on the different pairs, the differences between the edge intensities are compared, and the pair having the larger difference between the edge intensities is used preferentially.

**Claims**

1.   A stereo camera device comprising:

a stereo camera unit; and
an arithmetic processing unit,
wherein:

the stereo camera unit includes a pair of cameras for capturing images of a predetermined space, and is configured to provide the captured images respectively by the pair of cameras to the arithmetic processing unit;
the arithmetic processing unit includes a first converter, a second converter, and a disparity estimation unit;
the first converter is configured to convert the captured images by the pair of cameras into first conversion images;
the first conversion image is defined as an image in which a position of a pixel is represented by two-dimensional orthogonal coordinates defined by a first angle around a first axis and a second angle around a second axis;
the second converter is configured to convert the captured images by the pair of cameras into second conversion images;
the second conversion image is defined as an image in which a position of a pixel is represented by two-dimensional orthogonal coordinates defined by the first angle and a third angle around a third axis;
the first axis is defined by a straight line connecting optical centers of the pair of cameras to each other;
the second axis is defined by an optical axis of the camera;
the third axis is defined by an axis orthogonal to the first axis and the second axis; and
the disparity estimation unit is configured to calculate a disparity regarding a desired point in the space based on the first conversion images obtained by the first converter and the second conversion images obtained by the second converter.

2.   The stereo camera device as set forth in claim 1, wherein:

the disparity estimation unit is configured to calculate corresponding points regarding the desired point from the two first conversion images respectively corresponding to the pair of cameras, and calculate a first disparity regarding the desired point based on the corresponding points, and evaluate a first degree of coincidence between the corresponding points of the two first conversion images;
the disparity estimation unit is configured to calculate corresponding points regarding the desired point from the two second conversion images respectively corresponding to the pair of cameras, and calculate a second disparity regarding the desired point based on the corresponding points, and evaluate a second degree of coincidence between the corresponding points of the two second conversion images; and
the disparity estimation unit is configured to compare the first degree of coincidence with the second degree of coincidence with regard to the same desired point, and select the first disparity as the disparity regarding the desired point when the first degree of coincidence is higher than the second degree of coincidence, and select the second disparity as the disparity regarding the desired point when the first degree of coincidence is lower than the second degree of coincidence.

**3.** The stereo camera device as set forth in claim 2, wherein:

the arithmetic processing unit further includes a region evaluation unit;
the region evaluation unit is configured to calculate a first evaluation value regarding a change in a luminance value with regard to a first pixel of the first conversion image and a second evaluation value regarding a change in a luminance value with regard to a second pixel of the second conversion image corresponding to the first pixel;
the region evaluation unit is configured to calculate a difference between the first evaluation value and the second evaluation value and compare the difference with a predetermined threshold;
the region evaluation unit is configured to
compare the change in the luminance value of the first pixel and the change in the luminance value of the second pixel when the difference exceeds the threshold, and
select a first condition for the first pixel and the second pixel when the change in the luminance value of the first pixel exceeds the change in the luminance value of the second pixel, and
select a second condition for the first pixel and the second pixel when the change in the luminance value of the first pixel falls below the change in the luminance value of the second pixel, and
select a third condition for the first pixel and the second pixel when the difference is equal to the threshold or less; and
the region evaluation unit is configured to
when the first condition is selected for the first pixel and the second pixel, calculate the corresponding points by use of the first conversion images with regard to the first pixel and the second pixel, and
when the second condition is selected for the first pixel and the second pixel, calculate the corresponding points by use of the second conversion images with regard to the first pixel and the second pixel, and
when the third condition is selected for the first pixel and the second pixel, calculate the corresponding points by use of the first conversion images and the second conversion images with regard to the first pixel and the second pixel.

**4.** The stereo camera device as set forth in claim 2, wherein:

the first converter is configured to decide a first extraction region used for extracting the corresponding point from the first conversion image in accordance with a predetermined first decision condition, and calculate a pixel value regarding a pixel included in the first extraction region, and not calculate a pixel value regarding a pixel not included in the first extraction region; and
the second converter is configured to decide a second extraction region used for extracting the corresponding point from the second conversion image in accordance with a predetermined second decision condition, and calculate a pixel value regarding a pixel included in the second extraction region, and not calculate a pixel value regarding a pixel not included in the second extraction region.

**5.** The stereo camera device as set forth in any one of claims 1 to 4, wherein:

the stereo camera device comprises a plurality of stereo camera units;
the plurality of stereo camera units are arranged such that the first axes thereof cross each other and the second axes thereof are parallel to each other;
the disparity estimation unit is configured to calculate the disparity regarding the desired point for each of the plurality of stereo camera units;
the arithmetic processing unit includes a selection processing unit; and
the selection processing unit is configured to calculate a degree of reliability for each disparity calculated by the disparity estimation unit, and select the disparity having the highest degree of reliability from the disparities estimated by the disparity estimation unit.

**6.** The stereo camera device as set forth in claim 5, wherein
one of the two cameras of one of the plurality of stereo camera units is used as one camera of another stereo camera unit.

**7.** A computer-readable recording medium storing a program used in a computer connected to a stereo camera unit, wherein:

the stereo camera unit includes a pair of cameras for capturing images of a predetermined space, and is configured to provide the captured images respectively by the pair of cameras to the arithmetic processing unit;

the pair of cameras are arranged such that optical axes thereof are parallel to each other and fields of view thereof are overlapped with each other;

the program is designed to have the computer functions a first converter, a second converter, and a disparity estimation unit;

the first converter is configured to convert the captured images by the pair of cameras into first conversion images;

the first conversion image is defined as an image in which a position of a pixel is represented by two-dimensional orthogonal coordinates defined by a first angle around a first axis and a second angle around a second axis;

the second converter is configured to convert the captured images by the pair of cameras into second conversion images;

the second conversion image is defined as an image in which a position of a pixel is represented by two-dimensional orthogonal coordinates defined by the first angle and a third angle around a third axis;

the first axis is defined by a straight line connecting optical centers of the pair of cameras to each other;

the second axis is defined by an optical axis of the camera;

the third axis is defined by an axis orthogonal to the first axis and the second axis; and

the disparity estimation unit is configured to calculate a disparity regarding a desired point in the space based on the first conversion images obtained by the first converter and the second conversion images obtained by the second converter.

*FIG. 1*

*FIG. 2*

**FIG. 3**

**FIG. 4**

FIG. 5

FIG. 6

*FIG. 7*

*FIG. 8*

(a)

(b)

## FIG. 9

## FIG. 10

## FIG. 11

FIG. 12

START

S11 |E1−E2|>T1?  no

yes

S13 E1>E2?  no

yes

S15
the condition is decided such that
the second conversion image is used.

S14
the condition is decided such that
the first conversion image is used.

S12
the condition is decided such that
the first conversion image and the
second conversion image are used together.

the process has been completed
for all the pixels?  no

yes

END

EP 2 717 013 A1

**FIG. 13**

(a)

(b)

**FIG. 14**

*FIG. 15*

*FIG. 16*

FIG. 17

(a)

302

y

x

112

111

z

303

304

301

(b)

302

y

x

113

114

z

303

304

301

## FIG. 18

FIG. 19

FIG. 20

FIG. 21

FIG. 22

*FIG. 23*

(a)

(b)

*FIG. 24*

| **INTERNATIONAL SEARCH REPORT** | International application No. |
|---|---|
| | PCT/JP2012/063964 |

**A. CLASSIFICATION OF SUBJECT MATTER**
*G01C3/06*(2006.01)i, *G01B11/00*(2006.01)i, *G06T1/00*(2006.01)i, *H04N13/02*(2006.01)i

According to International Patent Classification (IPC) or to both national classification and IPC

**B. FIELDS SEARCHED**

Minimum documentation searched (classification system followed by classification symbols)
G01C3/00-3/32, G01B11/00-11/30, G06T1/00-1/40;3/00-9/40, H04N13/00-17/06, G03B35/00-37/06

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho   1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-96162 A  (Iwate University), 24 April 2008 (24.04.2008), entire text; fig. 1 to 19 (Family: none) | 1-7 |
| A | JP 2007-24647 A  (Iwate University), 01 February 2007 (01.02.2007), entire text; fig. 1 to 20 (Family: none) | 1-7 |
| A | JP 2009-139246 A  (Honda Motor Co., Ltd.), 25 June 2009 (25.06.2009), entire text; fig. 1 to 14 & US 2009/0148036 A1    & EP 2068280 A2 | 1-7 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July, 2012 (09.07.12) | 17 July, 2012 (17.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | INTERNATIONAL SEARCH REPORT | International application No. |
|---|---|---|
| | | PCT/JP2012/063964 |

C (Continuation).　　DOCUMENTS CONSIDERED TO BE RELEVANT

| Category* | Citation of document, with indication, where appropriate, of the relevant passages | Relevant to claim No. |
|---|---|---|
| A | JP 2011-64566 A　(Fujitsu Ltd.),<br>31 March 2011 (31.03.2011),<br>entire text; fig. 1 to 12<br>& US 2011/0063436 A1 | 1-7 |

Form PCT/ISA/210 (continuation of second sheet) (July 2009)

**EP 2 717 013 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007024647 A

- JP 2009139246 A

**Non-patent literature cited in the description**

- **ABRAHAM, S. ; FORSTNER. W.** Fish-Eye-Stereo Calibration and Epipolar Rectification. *International Journal of Photogrammetry and Remote Sensing,* August 2005, vol. 59 (5